# EUROPEAN PATENT SPECIFICATION

(11) **EP 3 780 835 B1**
(45) Date of publication and mention of the grant of the patent: **03.09.2025**
(21) Application number: 18913511.4
(22) Date of filing: 04.04.2018
(51) Int. Cl.: H04L 5/00, H04L 5/14, H04W 48/12

(54) **COMMUNICATION METHOD AND APPARATUS, AND COMPUTER READABLE STORAGE MEDIUM**
KOMMUNIKATIONSVERFAHREN UND -VORRICHTUNG SOWIE COMPUTERLESBARES SPEICHERMEDIUM
PROCÉDÉ ET APPAREIL DE COMMUNICATION ET SUPPORT DE STOCKAGE LISIBLE PAR ORDINATEUR

(43) Date of publication of application: 17.02.2021
(73) Proprietor: Huawei Technologies Co., Ltd., Longgang Shenzhen, Guangdong 518129 (CN)
(72) Inventor: LI, Jun, Shenzhen, Guangdong 518129 (CN); JIN, Zhe, Shenzhen, Guangdong 518129 (CN); TIE, Xiaolei, Shenzhen, Guangdong 518129 (CN)
(74) Representative: Thun, Clemens
(86) International application number: PCT/CN2018/081997
(87) International publication number: WO 2019/191962

(56) References cited:
- WO-A1-2017/192624
- WO-A1-2018/026199
- CN-A- 107 371 240
- LENOVO ET AL: "Views on TDD downlink aspect", vol. RAN WG1, no. Reno, USA; 20171127 - 20171201, 19 November 2017 (2017-11-19), XP051370409, Retrieved from the Internet <URL:http://www.3gpp.org/ftp/tsg%5Fran/WG1%5FRL1/TSGR1%5F91/Docs/> [retrieved on 20171119]
- ERICSSON: "Analysis of redirection to NB-IoT non-anchor carrier", vol. RAN WG4, no. Ljubljana, Slovenia; 20161010 - 20161014, 19 October 2016 (2016-10-19), XP051164609, Retrieved from the Internet <URL:http://www.3gpp.org/ftp/tsg_ran/WG4_Radio/TSGR4_77/Docs/> [retrieved on 20161019]
- HUAWEI ET AL: "System information scheduling in TDD mode", vol. RAN WG2, no. Reno, USA; 20171127 - 20171201, 17 November 2017 (2017-11-17), XP051371995, Retrieved from the Internet <URL:http://www.3gpp.org/ftp/tsg%5Fran/WG2%5FRL2/TSGR2%5F100/Docs/> [retrieved on 20171117]

## Description

### TECHNICAL FIELD

This application relates to the communications field, and more specifically, to a communications method and apparatus, and a computer-readable storage medium.

### BACKGROUND

In a communications system, time division duplex (time division duplexing, TDD) means that a signal is transmitted and received in different timeslots of a same frequency channel, and a receive channel is separated from a transmit channel in terms of time in TDD. Because a TDD scenario does not require paired frequencies, TDD may be conveniently configured on scattered frequency bands that are not easily used in a frequency division duplex (frequency division duplexing, FDD) scenario, so that spectrum flexibility can be achieved to some extent, and spectrum utilization can be effectively improved.

However, in the TDD scenario, because a quantity of downlink subframes on an anchor carrier is limited, to resolve a resource configuration problem, a SIB1 may indicate another SIB to be sent on a non-anchor carrier. When the another SIB is sent on the non-anchor carrier, a terminal device does not know a valid (valid) subframe configuration on the non-anchor carrier, and therefore the terminal device may receive the another SIB in an invalid (invalid) subframe. Consequently, the terminal device cannot receive the another SIB, and cannot work normally in the TDD scenario.

The document Lenove et al.: "Views on TDD downlink aspect", R1-1719740, is an early standardization document with regard to TDD downlink aspects in LTE.

The document ERICSON: "Analysis of redirection to NB-IoT non-anchor carrier", R4-168572, is also an early standardization document with regard to transmitting setup messages on anchor carriers and non-anchor carriers in LTE.

The document Huawei et al.: "System information scheduling in TDD mode", R2-1713195 is a further standardization document dealing with the scheduling of system information in LTE TDD mode. WO 2017/192624 A1 relates to directing a UE via a first carrier to receive system information on a second carrier.

### SUMMARY

This application provides a communications method and apparatus, and a computer-readable storage medium, to determine a valid subframe on a non-anchor carrier. This problem is solved by the subject matter of the independent claims. Further implementation forms are provided in the dependent claims.

According to a first aspect, not covered by the invention, a communications method is provided, including: determining a valid subframe and an invalid subframe on an anchor carrier; determining at least one valid subframe on a non-anchor carrier based on the valid subframe and the invalid subframe on the anchor carrier; and receiving another system information block SIB in the at least one valid subframe on the non-anchor carrier, where the another SIB is a system information block other than a SIB1.

According to the technical solution provided in this application, a terminal device receives the another SIB in the valid subframe on the non-anchor carrier. Therefore, it can be ensured that the terminal device correctly receives the another SIB, so that it is ensured that the terminal device can work normally in a TDD scenario. In addition, the terminal device can determine the at least one valid subframe on the non-anchor carrier without introducing new signaling, so that signaling overheads can be reduced.

Specifically, the anchor carrier may be a carrier for transmitting a PSS, an SSS, and a PBCH, and the non-anchor carrier may be a carrier for transmitting other information instead of a PSS, an SSS, and a PBCH.

The SIB1 is a system information block type, mainly carries at least one of information related to cell access and cell selection, scheduling information of another SIB block, or the like, and is a most important system information block.

In a possible implementation, the communications method includes: determining a valid downlink subframe and an invalid downlink subframe on the anchor carrier; determining at least one valid downlink subframe on the non-anchor carrier based on the valid downlink subframe and the invalid downlink subframe on the anchor carrier; and receiving another SIB in the at least one valid downlink subframe on the non-anchor carrier.

In a possible implementation, the communications method includes: determining a valid downlink subframe and a valid special subframe on the anchor carrier; determining at least one valid downlink subframe and at least one valid special subframe on the non-anchor carrier based on the valid downlink subframe and the valid special subframe on the anchor carrier; and receiving another SIB in the at least one valid downlink subframe and the at least one valid special subframe on the non-anchor carrier.

In a possible implementation, the communications method includes: determining the valid subframe and the invalid subframe on the anchor carrier; determining the at least one valid subframe on the non-anchor carrier based on the valid subframe and the invalid subframe on the anchor carrier; determining at least one valid downlink subframe, or at least one valid downlink subframe and at least one valid special subframe on the non-anchor carrier based on an uplink-downlink subframe configuration on the non-anchor carrier and the at least one valid subframe on the non-anchor carrier; and receiving another SIB in the at least one valid downlink subframe, or in the at least one valid downlink subframe and the at least one valid special subframe on the non-anchor carrier.
and receiving another SIB in the at least one valid downlink subframe, or in the at least one valid downlink subframe and the at least one valid special subframe on the non-anchor carrier.

In a possible implementation, the determining at least one valid subframe on a non-anchor carrier based on the valid subframe and the invalid subframe on the anchor carrier includes: determining that a subframe that is on the non-anchor carrier and that corresponds to the valid subframe on the anchor carrier is the at least one valid subframe on the non-anchor carrier.

Specifically, the correspondence may mean that super frames on the anchor carrier are in a one-to-one correspondence with super frames on the non-anchor carrier, radio frames on the anchor carrier are in a one-to-one correspondence with radio frames on the non-anchor carrier, and subframes on the anchor carrier are in a one-to-one correspondence with subframes on the non-anchor carrier. For example, a radio frame 0 on the anchor carrier corresponds to a radio frame 0 on the non-anchor carrier, and a radio frame 1 on the anchor carrier corresponds to a radio frame 1 on the non-anchor carrier. A subframe 0 in the radio frame 0 on the anchor carrier corresponds to a subframe 0 in the radio frame 0 on the non-anchor carrier, a subframe 1 in the radio frame 0 on the anchor carrier corresponds to a subframe 1 in the radio frame 0 on the non-anchor carrier, and by analogy, a subframe 9 in the radio frame 0 on the anchor carrier corresponds to a subframe 9 in the radio frame 0 on the non-anchor carrier.

In a possible implementation, the determining that a subframe that is on the non-anchor carrier and that corresponds to the valid subframe on the anchor carrier is the at least one valid subframe on the non-anchor carrier includes: determining that the subframe that is on the non-anchor carrier and that corresponds to the valid subframe on the anchor carrier and a subframe that is on the non-anchor carrier and that corresponds to a subframe for transmitting a target signal on the anchor carrier are the at least one valid subframe on the non-anchor carrier, where the target signal includes at least one of the following signals: a primary synchronization signal PSS, a secondary synchronization signal SSS, and a physical broadcast channel PBCH.

In a possible implementation, the target signal further includes the SIB1, and the SIB1 is transmitted on the anchor carrier.

In a possible implementation, on the anchor carrier, a subframe for transmitting the PSS in the target signal is a subframe 5, a subframe for transmitting the SSS in the target signal is a subframe 0, a subframe for transmitting the PBCH in the target signal is a subframe 9, and a subframe for transmitting the SIB1 in the target signal is a subframe 0 or a subframe 4.

Specifically, the subframe that is on the non-anchor carrier and that corresponds to the subframe for transmitting the target signal on the anchor carrier may mean that the subframe 5 for transmitting the PSS on the anchor carrier corresponds to a subframe 5 on the non-anchor carrier, the subframe 0 for transmitting the SSS on the anchor carrier corresponds to a subframe 0 on the non-anchor carrier, the subframe 9 for transmitting the PBCH on the anchor carrier corresponds to a subframe 9 on the non-anchor carrier, and the subframe 0 for transmitting the SIB1 on the anchor carrier corresponds to the subframe 0 on the non-anchor carrier or the subframe 4 for transmitting the SIB1 on the anchor carrier corresponds to a subframe 4 on the non-anchor carrier.

In a possible implementation, the SIB1 is transmitted on the non-anchor carrier, and the determining that a subframe that is on the non-anchor carrier and that corresponds to the valid subframe on the anchor carrier is the at least one valid subframe on the non-anchor carrier includes: determining that the subframe that is on the non-anchor carrier and that corresponds to the valid subframe on the anchor carrier is the at least one valid subframe on the non-anchor carrier, and determining that a subframe for transmitting the SIB 1 on the non-anchor carrier is an invalid subframe on the non-anchor carrier.

In a possible implementation, the determining a valid subframe and an invalid subframe on an anchor carrier includes: receiving the SIB1, where the SIB1 includes first information, and the first information is used to indicate a valid subframe configuration on the anchor carrier; and determining the valid subframe and the invalid subframe on the anchor carrier based on the valid subframe configuration on the anchor carrier and a subframe for transmitting a first signal on the anchor carrier, where the first signal includes at least one of the following signals: a PSS, an SSS, a PBCH, and the SIB1.

According to a second aspect, a communications method is provided, including: receiving a system information block SIB1, where the SIB1 includes first information, and the first information is used to indicate a valid subframe configuration on a non-anchor carrier; determining at least one valid subframe on the non-anchor carrier based on the valid subframe configuration on the non-anchor carrier; and receiving another system information block SIB in the at least one valid subframe on the non-anchor carrier, where the another SIB is a system information block other than the SIB1.

According to the technical solution provided in this application, a terminal device receives the another SIB in the valid subframe on the non-anchor carrier. Therefore, it can be ensured that the terminal device correctly receives the another SIB, so that it is ensured that the terminal device can work normally in a TDD scenario.

In a possible implementation, the first information is further used to indicate a valid subframe configuration on an anchor carrier.

In this application, the first information may be reused, and the first information is used to indicate both the valid subframe configuration on the anchor carrier and the valid subframe configuration on the non-anchor carrier. Therefore, signaling overheads can be reduced.

In a possible implementation, the SIB1 further includes second information, and the second information is used to indicate the valid subframe configuration on the anchor carrier.

In this indication manner, a valid subframe and an invalid subframe on the non-anchor carrier can be accurately indicated, so that a resource waste can be avoided.

In a possible implementation, the first information occupies M bits, each bit in the M bits is used to indicate whether a subframe corresponding to the bit is a valid subframe or an invalid subframe on the non-anchor carrier, and M is a positive integer.

In a possible implementation, the M bits are 10 bits or 40 bits.

Specifically, the correspondence may mean that the M bits are in a one-to-one correspondence with subframes on the non-anchor carrier. For example, if the M bits are 10 bits, the correspondence means that the 1^{st} bit corresponds to a subframe 0 in a radio frame 0, the 2^{nd} bit corresponds to a subframe 1 in the radio frame 0, and by analogy, the 10^{th} bit corresponds to a subframe 9 in the radio frame 0.

According to a third aspect, not covered by the invention, a communications method is provided, including: receiving a system information block SIB1, where the SIB1 includes first information and second information, the first information is used to indicate a valid subframe configuration on an anchor carrier, and the second information is used to indicate a valid subframe configuration of a subframe that is on a non-anchor carrier and that corresponds to an invalid subframe on the anchor carrier; determining at least one valid subframe on the non-anchor carrier based on the valid subframe configuration on the anchor carrier and the valid subframe configuration of the subframe that is on the non-anchor carrier and that corresponds to the invalid subframe on the anchor carrier; and receiving another SIB in the at least one valid subframe on the non-anchor carrier, where the another SIB is a system information block other than the SIB1.

According to the technical solution provided in this application, only a relatively small amount of information is required to indicate whether the subframe that is on the non-anchor carrier and that corresponds to the invalid subframe on the anchor carrier is a valid subframe or an invalid subframe, so that a valid subframe and an invalid subframe on the non-anchor carrier can be accurately determined by using relatively small signaling overheads.

According to a fourth aspect, not covered by the invention, a communications method is provided, including: determining a valid subframe and an invalid subframe on an anchor carrier; determining at least one valid subframe on a non-anchor carrier based on the valid subframe and the invalid subframe on the anchor carrier; and sending another system information block SIB in the at least one valid subframe on the non-anchor carrier, where the another SIB is a system information block other than a SIB1.

According to the technical solution provided in this application, a network device determines the at least one valid subframe on the non-anchor carrier in a specific manner, and sends the another SIB in the at least one valid subframe on the non-anchor carrier. Therefore, it can be ensured that a terminal device correctly receives the another SIB, so that it is ensured that the terminal device can work normally in a TDD scenario. In addition, the network device determines the at least one valid subframe on the non-anchor carrier without introducing new signaling, so that signaling overheads can be reduced.

Specifically, the anchor carrier may be a carrier for transmitting a PSS, an SSS, and a PBCH, and the non-anchor carrier may be a carrier for transmitting other information instead of a PSS, an SSS, and a PBCH.

The SIB1 is a system information block type, mainly carries at least one of information related to cell access and cell selection, scheduling information of another SIB block, or the like, and is a most important system information block.

In a possible implementation, the communications method includes: determining a valid downlink subframe and an invalid downlink subframe on the anchor carrier; determining at least one valid downlink subframe on the non-anchor carrier based on the valid downlink subframe and the invalid downlink subframe on the anchor carrier; and sending another SIB in the at least one valid downlink subframe on the non-anchor carrier.

In a possible implementation, the communications method includes: determining a valid downlink subframe and a valid special subframe on the anchor carrier; determining at least one valid downlink subframe and at least one valid special subframe on the non-anchor carrier based on the valid downlink subframe and the valid special subframe on the anchor carrier; and sending another SIB in the at least one valid downlink subframe and the at least one valid special subframe on the non-anchor carrier.

In a possible implementation, the communications method includes: determining the valid subframe and the invalid subframe on the anchor carrier; determining the at least one valid subframe on the non-anchor carrier based on the valid subframe and the invalid subframe on the anchor carrier; determining at least one valid downlink subframe, or at least one valid downlink subframe and at least one valid special subframe on the non-anchor carrier based on an uplink-downlink subframe configuration on the non-anchor carrier and the at least one valid subframe on the non-anchor carrier; and sending another SIB in the at least one valid downlink subframe, or in the at least one valid downlink subframe and the at least one valid special subframe on the non-anchor carrier.

In a possible implementation, the determining at least one valid subframe on a non-anchor carrier based on the valid subframe and the invalid subframe on the anchor carrier includes: determining that a subframe that is on the non-anchor carrier and that corresponds to the valid subframe on the anchor carrier is the at least one valid subframe on the non-anchor carrier.

Specifically, the correspondence may mean that super frames on the anchor carrier are in a one-to-one correspondence with super frames on the non-anchor carrier, radio frames on the anchor carrier are in a one-to-one correspondence with radio frames on the non-anchor carrier, and subframes on the anchor carrier are in a one-to-one correspondence with subframes on the non-anchor carrier. For example, a radio frame 0 on the anchor carrier corresponds to a radio frame 0 on the non-anchor carrier, and a radio frame 1 on the anchor carrier corresponds to a radio frame 1 on the non-anchor carrier. A subframe 0 in the radio frame 0 on the anchor carrier corresponds to a subframe 0 in the radio frame 0 on the non-anchor carrier, a subframe 1 in the radio frame 0 on the anchor carrier corresponds to a subframe 1 in the radio frame 0 on the non-anchor carrier, and by analogy, a subframe 9 in the radio frame 0 on the anchor carrier corresponds to a subframe 9 in the radio frame 0 on the non-anchor carrier.

In a possible implementation, the determining that a subframe that is on the non-anchor carrier and that corresponds to the valid subframe on the anchor carrier is the at least one valid subframe on the non-anchor carrier includes: determining that the subframe that is on the non-anchor carrier and that corresponds to the valid subframe on the anchor carrier and a subframe that is on the non-anchor carrier and that corresponds to a subframe for transmitting a target signal on the anchor carrier are the at least one valid subframe on the non-anchor carrier, where the target signal includes at least one of the following signals: a primary synchronization signal PSS, a secondary synchronization signal SSS, and a physical broadcast channel PBCH.

In a possible implementation, the target signal further includes the SIB1, and the SIB1 is transmitted on the anchor carrier.

In a possible implementation, on the anchor carrier, a subframe for transmitting the PSS in the target signal is a subframe 5, a subframe for transmitting the SSS in the target signal is a subframe 0, a subframe for transmitting the PBCH in the target signal is a subframe 9, and a subframe for transmitting the SIB 1 in the target signal is a subframe 0 or a subframe 4.

Specifically, the subframe that is on the non-anchor carrier and that corresponds to the subframe for transmitting the target signal on the anchor carrier may mean that the subframe 5 for transmitting the PSS on the anchor carrier corresponds to a subframe 5 on the non-anchor carrier, the subframe 0 for transmitting the SSS on the anchor carrier corresponds to a subframe 0 on the non-anchor carrier, the subframe 9 for transmitting the PBCH on the anchor carrier corresponds to a subframe 9 on the non-anchor carrier, and the subframe 0 for transmitting the SIB 1 on the anchor carrier corresponds to the subframe 0 on the non-anchor carrier or the subframe 4 for transmitting the SIB 1 on the anchor carrier corresponds to a subframe 4 on the non-anchor carrier.

In a possible implementation, the SIB1 is transmitted on the non-anchor carrier, and the determining that a subframe that is on the non-anchor carrier and that corresponds to the valid subframe on the anchor carrier is the at least one valid subframe on the non-anchor carrier includes: determining that the subframe that is on the non-anchor carrier and that corresponds to the valid subframe on the anchor carrier is the at least one valid subframe on the non-anchor carrier, and determining that a subframe for transmitting the SIB1 on the non-anchor carrier is an invalid subframe on the non-anchor carrier.

In a possible implementation, the determining a valid subframe and an invalid subframe on an anchor carrier includes: sending the SIB1, where the SIB1 includes first information, and the first information is used to indicate a valid subframe configuration on the anchor carrier; and determining the valid subframe and the invalid subframe on the anchor carrier based on the valid subframe configuration on the anchor carrier and a subframe for transmitting a first signal on the anchor carrier, where the first signal includes at least one of the following signals: a PSS, an SSS, a PBCH, and the SIB1.

According to a fifth aspect, a communications method is provided, including: sending a system information block SIB1, where the SIB1 includes first information, and the first information is used to indicate a valid subframe configuration on a non-anchor carrier; determining at least one valid subframe on the non-anchor carrier based on the valid subframe configuration on the non-anchor carrier; and sending another system information block SIB in the at least one valid subframe on the non-anchor carrier, where the another SIB is a system information block other than the SIB1.

According to the technical solution provided in this application, a network device determines the at least one valid subframe on the non-anchor carrier in a specific manner, and sends the another SIB in the valid subframe on the non-anchor carrier. Therefore, it can be ensured that a terminal device correctly receives the another SIB, so that it is ensured that the terminal device can work normally in a TDD scenario.

In a possible implementation, the first information is further used to indicate a valid subframe configuration on an anchor carrier.

In this application, the first information may be reused, and the first information is used to indicate both the valid subframe configuration on the anchor carrier and the valid subframe configuration on the non-anchor carrier. Therefore, signaling overheads can be reduced.

In a possible implementation, the SIB1 further includes second information, and the second information is used to indicate the valid subframe configuration on the anchor carrier.

In this indication manner, a valid subframe and an invalid subframe on the non-anchor carrier can be accurately indicated, so that a resource waste can be avoided.

In a possible implementation, the first information occupies M bits, each bit in the M bits is used to indicate whether a subframe corresponding to the bit is a valid subframe or an invalid subframe on the non-anchor carrier, and M is a positive integer.

In a possible implementation, the M bits are 10 bits or 40 bits.

Specifically, the correspondence may mean that the M bits are in a one-to-one correspondence with subframes on the non-anchor carrier. For example, if the M bits are 10 bits, the correspondence means that the 1^{st} bit corresponds to a subframe 0 in a radio frame 1, the 2^{nd} bit corresponds to a subframe 1 in the radio frame 1, and by analogy, the 10^{th} bit corresponds to a subframe 9 in the radio frame 1.

According to a sixth aspect, not covered by the invention, a communications method is provided, including: sending a system information block SIB1, where the SIB1 includes first information and second information, the first information is used to indicate a valid subframe configuration on an anchor carrier, and the second information is used to indicate a valid subframe configuration of a subframe that is on a non-anchor carrier and that corresponds to an invalid subframe on the anchor carrier; determining at least one valid subframe on the non-anchor carrier based on the valid subframe configuration on the anchor carrier and the valid subframe configuration of the subframe that is on the non-anchor carrier and that corresponds to the invalid subframe on the anchor carrier; and sending another SIB in the at least one valid subframe on the non-anchor carrier, where the another SIB is a system information block other than the SIB1.

According to the technical solution provided in this application, only a relatively small amount of information is required to indicate whether the subframe that is on the non-anchor carrier and that corresponds to the invalid subframe on the anchor carrier is a valid subframe or an invalid subframe, so that a valid subframe and an invalid subframe on the non-anchor carrier can be accurately determined by using relatively small signaling overheads.

According to a seventh aspect, not covered by the invention, a communications apparatus is provided, including a unit configured to perform the method according to the first aspect and any implementation of the first aspect.

According to an eighth aspect, not covered by the invention, a communications apparatus is provided, including a unit configured to perform the method according to the second aspect and any implementation of the second aspect.

According to a ninth aspect, not covered by the invention, a communications apparatus is provided, including a unit configured to perform the method according to the third aspect and any implementation of the third aspect.

According to a tenth aspect, not covered by the invention, a communications apparatus is provided, including a unit configured to perform the method according to the fourth aspect and any implementation of the fourth aspect.

According to an eleventh aspect, not covered by the invention, a communications apparatus is provided, including a unit configured to perform the method according to the fifth aspect and any implementation of the fifth aspect.

According to a twelfth aspect, not covered by the invention, a communications apparatus is provided, including a unit configured to perform the method according to the sixth aspect and any implementation of the sixth aspect.

According to a thirteenth aspect, not covered by the invention, a communications apparatus is provided. The communications apparatus includes a processor and a transceiver, and is configured to perform the method according to the first aspect and any implementation of the first aspect.

According to a fourteenth aspect, not covered by the invention, a communications apparatus is provided. The communications apparatus includes a processor and a transceiver, and is configured to perform the method according to the second aspect and any implementation of the second aspect.

According to a fifteenth aspect, not covered by the invention, a communications apparatus is provided. The communications apparatus includes a processor and a transceiver, and is configured to perform the method according to the third aspect and any implementation of the third aspect.

According to a sixteenth aspect, not covered by the invention, a communications apparatus is provided. The communications apparatus includes a processor and a transceiver, and is configured to perform the method according to the fourth aspect and any implementation of the fourth aspect.

According to a seventeenth aspect, not covered by the invention, a communications apparatus is provided. The communications apparatus includes a processor and a transceiver, and is configured to perform the method according to the fifth aspect and any implementation of the fifth aspect.

According to an eighteenth aspect, not covered by the invention, a communications apparatus is provided. The communications apparatus includes a processor and a transceiver, and is configured to perform the method according to any of the previous aspects.

According to a nineteenth aspect, not covered by the invention, a computer-readable storage medium is provided. The computer-readable storage medium is used to store program code executed by a device, and the program code includes an instruction used to perform the method according to the first aspect and all the implementations of the first aspect.

According to a twentieth aspect, not covered by the invention, a computer-readable storage medium is provided. The computer-readable storage medium is used to store program code executed by a device, and the program code includes an instruction used to perform the method according to the second aspect and all the implementations of the second aspect.

According to a twenty-first aspect, not covered by the invention, a computer-readable storage medium is provided. The computer-readable storage medium is used to store program code executed by a device, and the program code includes an instruction used to perform the method according to the third aspect and all the implementations of the third aspect.

According to a twenty-second aspect, not covered by the invention, a computer-readable storage medium is provided. The computer-readable storage medium is used to store program code executed by a device, and the program code includes an instruction used to perform the method according to the fourth aspect and all the implementations of the fourth aspect.

According to a twenty-third aspect, not covered by the invention, a computer-readable storage medium is provided. The computer-readable storage medium is used to store program code executed by a device, and the program code includes an instruction used to perform the method according to the fifth aspect and all the implementations of the fifth aspect.

According to a twenty-fourth aspect, not covered by the invention, a computer-readable storage medium is provided. The computer-readable storage medium is used to store program code executed by a device, and the program code includes an instruction used to perform the method according to the sixth aspect and all the implementations of the sixth aspect.

According to a twenty-fifth aspect, not covered by the invention, a computer program product is provided. The computer program product includes computer program code, and when the computer program code is run on a computer, the computer is enabled to perform the method according to the first aspect and any implementation of the first aspect.

According to a twenty-sixth aspect, not covered by the invention, a computer program product is provided. The computer program product includes computer program code, and when the computer program code is run on a computer, the computer is enabled to perform the method according to the second aspect and any implementation of the second aspect.

According to a twenty-seventh aspect, not covered by the invention, a computer program product is provided. The computer program product includes computer program code, and when the computer program code is run on a computer, the computer is enabled to perform the method according to the third aspect and any implementation of the third aspect.

According to a twenty-eighth aspect, not covered by the invention, a computer program product is provided. The computer program product includes computer program code, and when the computer program code is run on a computer, the computer is enabled to perform the method according to the fourth aspect and any implementation of the fourth aspect.

According to a twenty-ninth aspect, not covered by the invention, a computer program product is provided. The computer program product includes computer program code, and when the computer program code is run on a computer, the computer is enabled to perform the method according to the fifth aspect and any implementation of the fifth aspect.

According to a thirtieth aspect, not covered by the invention, a computer program product is provided. The computer program product includes computer program code, and when the computer program code is run on a computer, the computer is enabled to perform the method according to the sixth aspect and any implementation of the sixth aspect.

According to a thirty-first aspect, not covered by the invention, a chip is provided, including a processor and a memory. The memory is configured to store a computer program. The processor is configured to invoke and run the computer program in the memory. The computer program is used to implement the methods in the foregoing aspects.

According to a thirty-second aspect, not covered by the invention, a communications system is provided. The communications system includes the terminal device according to the seventh aspect, the ninth aspect, the tenth aspect, or the eleventh aspect and the network device according to the eighth aspect, the twelfth aspect, the thirteenth aspect, or the fourteenth aspect.

### BRIEF DESCRIPTION OF DRAWINGS

FIG. 1 is a schematic architectural diagram of a communications system to which an embodiment of this application is applied;
FIG. 2 is a schematic flowchart of a communications method according to an embodiment of this application;
FIG. 3 is an example diagram of an indication manner of a valid subframe according to an embodiment of this application;
FIG. 4 is a schematic diagram of determining at least one valid subframe on a non-anchor carrier according to an embodiment of this application;
FIG. 5 is a schematic flowchart of another communications method according to an embodiment of this application;
FIG. 6 is a schematic flowchart of another communications method according to an embodiment of this application;
FIG. 7 is a schematic flowchart of another communications method according to an embodiment of this application;
FIG. 8 is a schematic block diagram of a communications apparatus according to an embodiment of this application;
FIG. 9 is a schematic block diagram of another communications apparatus according to an embodiment of this application;
FIG. 10 is a schematic block diagram of another communications apparatus according to an embodiment of this application;
FIG. 11 is a schematic block diagram of another communications apparatus according to an embodiment of this application;
FIG. 12 is a schematic block diagram of another communications apparatus according to an embodiment of this application;
FIG. 13 is a schematic block diagram of another communications apparatus according to an embodiment of this application;
FIG. 14 is a schematic block diagram of another communications apparatus according to an embodiment of this application; and
FIG. 15 is a schematic block diagram of another communications apparatus according to an embodiment of this application.

### DESCRIPTION OF EMBODIMENTS

The following describes technical solutions of this application with reference to the accompanying drawings.

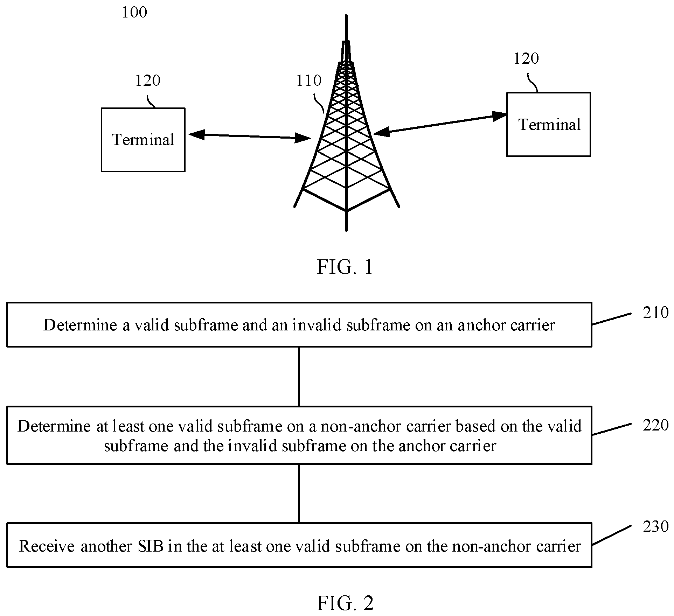

FIG. 1 shows a wireless communications system 100 to which an embodiment of this application is applied. The wireless communications system 100 may include a network device 110. The network device 110 may be a device communicating with a terminal device 120. The network device 110 may provide communication coverage for a specific geographical area, and may communicate with the terminal device 120 located in the coverage.

FIG. 1 shows one network device and two terminal devices as an example. Optionally, the communications system 100 may include a plurality of network devices, and another quantity of terminal devices may be included in coverage of each network device. This is not limited in this embodiment of this application.

Optionally, the wireless communications system 100 may further include other network entities such as a network controller and a mobility management entity. This is not limited in the embodiments of this application.

It should be understood that the technical solutions in the embodiments of this application may be applied to various communications systems, for example, a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, a long term evolution-advanced (advanced long term evolution, LTE-A) system, a universal mobile telecommunications system (universal mobile telecommunication system, UMTS), a new radio (new radio access technology, NR) system, and 5G.

With advent of the smart city and big data era, wireless communication implements connectivity of everything. Currently, there are a large quantity of connections between things. Most of these connections between things are carried in short-distance communications technologies such as Bluetooth and Wi-Fi, instead of carrier mobile networks. To meet transmission requirements of different internet of things (internet of things, IoT) services, the 3rd generation partnership project (the 3rd generation partnership project, 3GPP) carries out technical research on enhancing functions of a mobile communications network based on service features of the internet of things and characteristics of the mobile communications network, to adapt to booming service requirements of the internet of things.

Cellular network-based narrowband internet of things (narrow band-IoT, NB-IoT) becomes an important branch of the internet of everything. NB-IoT is deployed on a cellular network and consumes only a bandwidth of about 180 kHz. NB-IoT can be directly deployed on a GSM network, a UMTS network, or an LTE network, to reduce NB-IoT deployment costs and achieve smooth upgrade.

It should be further understood that, in the embodiments of this application, the terminal may include but is not limited to a terminal device applied to the internet of things, for example, may be a terminal device (which may be referred to as an "NB-IoT terminal") that accesses NB-IoT: a smart meter reading device, a logistics tracking device, or an environment monitoring device. The terminal may further include but is not limited to a mobile station (mobile station, MS), a mobile terminal (mobile terminal), a mobile telephone (mobile telephone), user equipment (user equipment, UE), a handset (handset), portable equipment (portable equipment), and the like. The terminal device may communicate with one or more core networks through a radio access network (radio access network, RAN). For example, the terminal device may be a mobile phone (or referred to as a "cellular" phone), or a computer having a wireless communication function. The terminal device may alternatively be a portable, pocket-sized, handheld, computer built-in, or vehicle-mounted mobile apparatus.

In the embodiments of this application, the network device may be an access network device, for example, may be a base station, a transmission reception point (transmit and receive point, TRP), or an access point. The base station may be a base transceiver station (base transceiver station, BTS) in GSM or CDMA, or may be a NodeB (nodeB) in WCDMA, or may be an evolved NodeB (evolved node B, eNB or e-NodeB) in LTE, or may be a gNodeB (gNB) in NR or 5G. This is not specifically limited in the embodiments of this application.

The mentioned carrier deployment mode is not specifically limited in the embodiments of this application. In an example, the carrier deployment mode may be a standalone (standalone) deployment mode, and the standalone carrier deployment mode may not depend on another communications system. For example, a carrier deployment bandwidth in the standalone deployment mode may be completely decoupled from a long term evolution (long term evolution, LTE) cell. In another example, the carrier deployment mode may be a guard-band (guardband) deployment mode, and a carrier in the guard-band deployment mode may not occupy a resource of another communications system. For example, the carrier in the guard-band deployment mode may not occupy an LTE resource, and may be deployed on an unused resource block in an LTE edge guard band. In another example, the carrier deployment mode may be an in-band (inband) deployment mode, and a carrier in the in-band deployment mode may be deployed in an operating bandwidth of another communications system. For example, the carrier in the in-band deployment mode may be deployed in an LTE operating bandwidth.

In an FDD scenario, an anchor carrier is a carrier on which the terminal device assumes that a primary synchronization signal (primary synchronization signal, PSS), a secondary synchronization signal (secondary synchronization signal, SSS), a physical broadcast channel (physical broadcast channel, PBCH), or a system information block (system information block, SIB) is transmitted. A non-anchor carrier is a carrier on which the terminal device assumes that no PSS, SSS, PBCH, or SIB is transmitted.

For a TDD scenario, refer to FDD. An anchor carrier may be understood as a carrier used to transmit a PSS, an SSS, and a PBCH, and a non-anchor carrier may be understood as a carrier used to transmitting other information instead of a PSS, an SSS, and a PBCH. A definition of an anchor carrier in the TDD scenario may be slightly different from that in the FDD scenario. Regardless of the TDD scenario or the FDD scenario, types of information that can be transmitted on the anchor carrier are more than those on the non-anchor carrier.

Generally, a subframe for transmitting the PSS is a subframe 5, and the PSS is transmitted in each radio frame. A subframe for transmitting the SSS is a subframe 0, and the SSS is transmitted in an even-numbered radio frame. A subframe for transmitting the PBCH is a subframe 9, and the PBCH is transmitted in each radio frame. On the anchor carrier, a subframe for transmitting a SIB1 is a subframe 0 or a subframe 4, and the subframe 0 for transmitting the SIB1 is a subframe 0 in which no SSS is transmitted.

In a communications system, there are a plurality of types of SIBs, and different SIBs carry different parameters and have different functions.

A SIB1 mainly carries information related to cell access and cell selection, scheduling information of another SIB, and the like, and is a most important system information block. The scheduling information of the another SIB that is carried in the SIB1 includes at least one of a period of system information (system information, SI), a window length of the SI, a window offset of the SI, a repetition mode of the SI, a size of a system information block, and mapping information of the another SIB. The another SIB is a system information block other than the SIB1.

It should be noted that, in an NB-IoT scenario, the SIB1 is a narrowband system information block 1 (system information block type1-narrow band, SIB 1-NB), and the another SIB is another SIB-NB.

In the TDD scenario, an LTE communications system currently supports the following uplink-downlink subframe configurations 0 to 6 shown in Table 1. "D" represents a downlink subframe, and is used for downlink transmission. "U" represents an uplink subframe, and is used for uplink transmission. "S" represents a special subframe, and the special subframe includes a guard period (guard period, GP), an uplink pilot timeslot (uplink pilot time slot, UpPTS), and a downlink pilot timeslot (downlink pilot time slot, DwPTS). UpPTS is used for uplink transmission, and DwPTS is used for downlink transmission. Currently, NB-IoT TDD supports the uplink-downlink subframe configurations 1 to 5, and the uplink-downlink subframe configuration 6 is under discussion. In the future, NB-IoT TDD may also support the uplink-downlink subframe configuration 6.

**Table 1**

| Uplink-downlink subframe configuration | Switching interval | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In the TDD scenario, because a quantity of downlink subframes in a radio frame is limited, another SIB may be sent on the non-anchor carrier. Specifically, a master information block (master information block, MIB) may indicate whether the SIB1 is sent on the anchor carrier or the non-anchor carrier, and the SIB1 indicates whether another SIB is sent on the anchor carrier or the non-anchor carrier.

When the another SIB is sent on the non-anchor carrier, the terminal device does not know a valid subframe that is on the non-anchor carrier and that is used for transmitting the another SIB. In this case, the terminal device may receive the another SIB in an invalid subframe on the non-anchor carrier. Consequently, the terminal device cannot correctly receive the another SIB, and cannot work normally in the TDD scenario.

The valid subframe mentioned in the embodiments of this application may include a valid downlink subframe, a valid uplink subframe, and/or a valid special subframe.

The valid downlink subframe may be a downlink subframe used for transmitting a physical downlink shared channel (physical downlink shared channel, PDSCH) other than the SIB1. In other words, the terminal device determines that a subframe in which the PDSCH carrying the SIB1 is located is an invalid downlink subframe. The invalid downlink subframe may be a downlink subframe that cannot be used for transmitting the PDSCH.

The valid uplink subframe may be an uplink subframe used for transmitting a physical uplink shared channel (physical uplink shared channel, PUSCH) and/or a physical random access channel (physical random access channel, PRACH). An invalid uplink subframe may be an uplink subframe that cannot be used for transmitting the PUSCH and/or the PRACH.

The valid special subframe may be a special subframe that may be used to transmit related information of the terminal device and/or the network device. An invalid special subframe is a special subframe that cannot be used for transmitting the related information.

For definitions of the valid uplink subframe, the invalid uplink subframe, the valid special subframe, and the invalid special subframe, refer to those in the FDD scenario. The definitions in the TDD scenario may be slightly different.

The embodiments of this application provide a communications method, to determine a valid subframe that is on a non-anchor carrier and that is used for transmitting another SIB, thereby ensuring that a terminal device can work normally in a TDD scenario.

FIG. 2 is a schematic flowchart of a communications method according to an embodiment of this application. The method in FIG. 2 may be performed by a terminal device, or may be performed by a chip in the terminal device. The method in FIG. 2 includes steps 210 to 230. The following separately describes steps 210 to 230 in detail.

Step 210: Determine a valid subframe and an invalid subframe on an anchor carrier.

Step 220: Determine at least one valid subframe on a non-anchor carrier based on the valid subframe and the invalid subframe on the anchor carrier.

In this embodiment of this application, the at least one valid subframe on the non-anchor carrier may also be referred to as a valid subframe set on the non-anchor carrier. The non-anchor carrier is a carrier used to transmit another SIB. The terminal device may determine a valid subframe and an invalid subframe on the non-anchor carrier based on a valid subframe configuration on the anchor carrier.

Step 230: Receive another SIB in the at least one valid subframe on the non-anchor carrier. In other words, the terminal device receives the another SIB in the valid subframe set on the non-anchor carrier.

In this embodiment of this application, that the terminal device receives the another SIB in the at least one valid subframe on the non-anchor carrier means that the terminal device receives the another SIB in at least one valid downlink subframe, or at least one valid downlink subframe and at least one valid special subframe on the non-anchor carrier.

Because the terminal device receives the another SIB in the valid subframe on the non-anchor carrier, it can be ensured that the terminal device correctly receives the another SIB, thereby ensuring that the terminal device can normally work in a TDD scenario. In addition, the terminal device can determine the at least one valid subframe on the non-anchor carrier without introducing new signaling, thereby reducing signaling overheads.

Optionally, the terminal device may determine the valid subframe and the invalid subframe on the anchor carrier based on the valid subframe configuration on the anchor carrier and a subframe for transmitting a first signal on the anchor carrier. The first signal may include at least one of the following signals: a PSS, an SSS, a PBCH, and a SIB1.

Specifically, the terminal device receives a SIB1 sent by a network device. The SIB1 carries preset information, and the preset information is used to indicate the valid subframe configuration on the anchor carrier.

The preset information may be a string of fields or characters. The preset information may be represented by using a bit (bit). For example, the preset information may be represented by using 10 bits, or may be represented by using 40 bits or 80 bits. This is not specifically limited in this embodiment of this application. Specifically, in an in-band deployment mode, 10 bits or 40 bits may be used to represent the preset information. In a standalone deployment mode or a guard-band deployment mode, 40 bits may be used to represent the preset information.

The 10 bits correspond to 10 subframes in one radio frame, the 40 bits correspond to 40 subframes in four radio frames, and the 80 bits correspond to 80 subframes in eight radio frames.

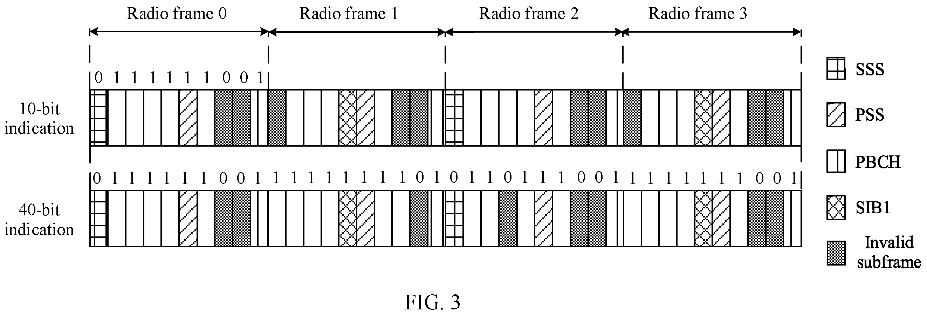

The following describes an indication manner of a valid subframe in this embodiment of this application with reference to FIG. 3.

In an example of 10 bits, the correspondence may mean that the 1^{st} bit corresponds to a subframe 0 in a radio frame X (X mod (10/10) = 0) (for example, a radio frame 0), the 2^{nd} bit corresponds to a subframe 1 in the radio frame 0, and by analogy, the 10^{th} bit corresponds to a subframe 9 in the radio frame 0. When a value of a bit is 0, it indicates that a subframe corresponding to the bit is an invalid subframe. When a value of a bit is 1, it indicates that a subframe corresponding to the bit is a valid subframe.

In an example of FIG. 3, assuming that the 10 bits are 0111111001, that is, first information is represented by using 0111111001, the first information indicates that the subframe 0, the subframe 7, and the subframe 8 are invalid subframes, and the remaining subframes are valid subframes.

In an example of 40 bits, the 1^{st} bit corresponds to a subframe 0 in a radio frame X (X mod (40/10) = 0), the 2^{nd} bit corresponds to a subframe 1 in the radio frame X, the 10^{th} bit corresponds to a subframe 9 in the radio frame X, the 11^{th} bit corresponds to a subframe 0 in a radio frame X+1, and by analogy, the 40^{th} bit corresponds to a subframe 9 in a radio frame X+3.

In an example of FIG. 3, assuming that the 40 bits are 01111110011111111101 01111110011111111001, it indicates that the subframe 0, the subframe 7, and the subframe 8 in the radio frame 0 are invalid subframes, the subframe 8 in the radio frame 1 is an invalid subframe, the subframe 0, the subframe 3, the subframe 7, and the subframe 8 in the radio frame 2 are invalid subframes, the subframe 7 and the subframe 8 in the radio frame 3 are invalid subframes, and the remaining subframes are valid subframes.

In addition, the terminal device further determines the subframe for transmitting the first signal on the anchor carrier, and determines that the subframe for transmitting the first signal on the anchor carrier is an invalid subframe. For example, if the terminal device determines that a subframe for transmitting the SSS on the anchor carrier is a subframe 0, a subframe for transmitting the PSS on the anchor carrier is a subframe 5, a subframe for transmitting the PBCH on the anchor carrier is a subframe 9, and a subframe for transmitting the SIB 1 on the anchor carrier is a subframe 4, the terminal device further determines that the subframe 0 for transmitting the SSS, the subframe 5, the subframe 9, and the subframe 4 for transmitting the SIB1-NB on the anchor carrier are invalid subframes. In other words, the terminal device finally determines that valid subframes on the anchor carrier are a subframe 1, a subframe 2, a subframe 3, and a subframe 6, and invalid subframes on the anchor carrier are the subframe 0 for transmitting the SSS, the subframe 4, the subframe 5, the subframe 7, the subframe 8, and the subframe 9.

It should be understood that not all periods of the first signal are 10 ms. In other words, the first signal is not necessarily transmitted in each radio frame. The terminal device determines only a corresponding subframe in a radio frame for transmitting the first signal as an invalid subframe on the anchor carrier. In an example of the SSS signal, if the SSS signal is sent in a subframe 0 in an even-numbered radio frame, the terminal device determines only the subframe 0 in the even-numbered radio frame as an invalid subframe, and still determines, based on the preset information, whether a subframe 0 in an odd-numbered radio frame is a valid subframe. If a bit corresponding to the preset information indicates that the subframe 0 in the odd-numbered radio frame is a valid subframe, the subframe 0 in the radio frame is a valid subframe.

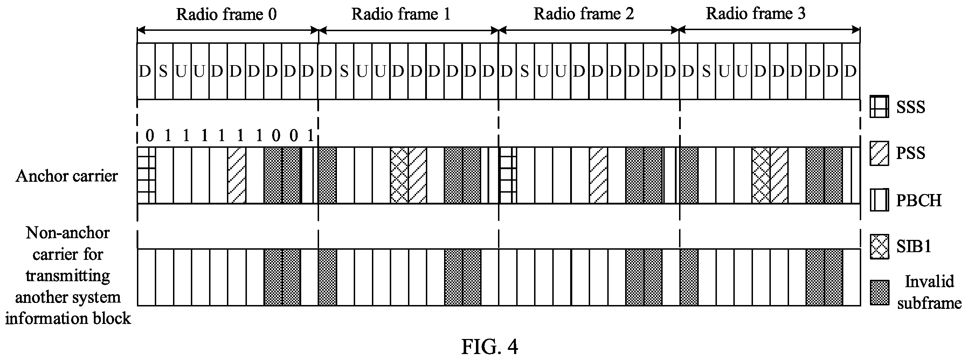

In an example of FIG. 4, the terminal device determines that in a radio frame 0 on the anchor carrier, invalid subframes are a subframe 0, a subframe 5, a subframe 7, a subframe 8, and a subframe 9, and valid subframes are a subframe 1, a subframe 2, a subframe 3, a subframe 4, and a subframe 6. In the radio frame 0, valid downlink subframes are the subframe 4 and the subframe 6, and a valid special subframe is the subframe 1. The terminal device determines that in a radio frame 1, invalid subframes are a subframe 0, a subframe 4, a subframe 5, a subframe 7, a subframe 8, and a subframe 9, and valid subframes are a subframe 1, a subframe 2, a subframe 3, and a subframe 6. In the radio frame 1, a valid downlink subframe is the subframe 6, and a valid special subframe is the subframe 1.

A specific implementation of step 220 is not specifically limited in this embodiment of this application. In an example, the terminal device may determine at least one valid downlink subframe on the non-anchor carrier based on a valid downlink subframe and an invalid downlink subframe on the anchor carrier. The terminal device receives another SIB in the at least one valid downlink subframe on the non-anchor carrier. In another example, the terminal device may determine at least one valid downlink subframe and at least one valid special subframe on the non-anchor carrier based on a valid downlink subframe and a valid special subframe on the anchor carrier. The terminal device receives another SIB in the at least one valid downlink subframe and the at least one valid special subframe on the non-anchor carrier. In another example, the terminal device may determine the valid subframe on the non-anchor carrier based on the valid subframe and the invalid subframe on the anchor carrier. The terminal device determines at least one valid downlink subframe, or at least one valid downlink subframe and at least one special subframe on the non-anchor carrier based on an uplink-downlink subframe configuration on the non-anchor carrier and the at least one valid subframe on the non-anchor carrier, and the terminal device receives another SIB in the at least one valid downlink subframe, or the at least one valid downlink subframe and the at least one special subframe on the non-anchor carrier.

The following describes a specific implementation of step 220 in detail by using an example.

In an example, the terminal device may directly determine that a subframe that is on the non-anchor carrier and that corresponds to the valid subframe on the anchor carrier is the at least one valid subframe on the non-anchor carrier. The correspondence may mean that super frames on the anchor carrier are in a one-to-one correspondence with super frames on the non-anchor carrier, radio frames on the anchor carrier are in a one-to-one correspondence with radio frames on the non-anchor carrier, and subframes on the anchor carrier are in a one-to-one correspondence with subframes on the non-anchor carrier. For example, a radio frame 0 on the anchor carrier corresponds to a radio frame 0 on the non-anchor carrier, and a radio frame 1 on the anchor carrier corresponds to a radio frame 1 on the non-anchor carrier; a subframe 1 in the radio frame 0 on the anchor carrier corresponds to a subframe 1 in the radio frame 0 on the non-anchor carrier, and a subframe 2 in the radio frame 0 on the anchor carrier corresponds to a subframe 2 in the radio frame 0 on the non-anchor carrier.

In an example of a valid subframe and an invalid subframe in the radio frame 0 on the anchor carrier, the terminal device determines that at least one valid subframe in the radio frame 0 on the non-anchor carrier is a subframe 1, a subframe 2, a subframe 3, a subframe 4, and a subframe 6.

In another example, when a SIB 1 is transmitted on the anchor carrier, the terminal device may determine that the subframe that is on the non-anchor carrier and that corresponds to the valid subframe on the anchor carrier and a subframe that is on the non-anchor carrier and that corresponds to a subframe for transmitting a target signal on the anchor carrier are the at least one valid subframe on the non-anchor carrier. The target signal includes at least one of the following signals: a PSS, an SSS, a PBCH, and a SIB1.

The subframe that is on the non-anchor carrier and that corresponds to the subframe for transmitting the target signal on the anchor carrier may mean that a subframe 5 for transmitting the PSS on the anchor carrier corresponds to a subframe 5 on the non-anchor carrier, a subframe 0 for transmitting the SSS on the anchor carrier corresponds to a subframe 0 on the non-anchor carrier, a subframe 9 for transmitting the PBCH on the anchor carrier corresponds to a subframe 9 on the non-anchor carrier, a subframe 0 for transmitting the SIB 1 on the anchor carrier corresponds to a subframe 0 on the non-anchor carrier, or a subframe 4 for transmitting the SIB 1 on the anchor carrier corresponds to a subframe 4 on the non-anchor carrier.

In an example of FIG. 4, if the terminal device determines that a subframe for transmitting the SSS on the anchor carrier is the subframe 0, a subframe for transmitting the PSS on the anchor carrier is the subframe 5, a subframe for transmitting the PBCH on the anchor carrier is the subframe 9, and a subframe for transmitting the SIB 1 on the anchor carrier is the subframe 4, the terminal device determines that at least one valid subframe in the radio frame 0 on the non-anchor carrier is the subframe 0, the subframe 1, the subframe 2, the subframe 3, the subframe 4, the subframe 5, the subframe 6, and the subframe 9. The terminal device determines that in the radio frame 0, valid downlink subframes on the non-anchor carrier are the subframe 0, the subframe 4, the subframe 5, the subframe 6, and the subframe 9, and a valid special subframe is the subframe 1.

Optionally, in an embodiment, if the terminal device determines that the SIB1 is transmitted on a non-anchor carrier, and the non-anchor carrier on which the SIB 1 is transmitted and a non-anchor carrier on which another SIB is transmitted are a same non-anchor carrier, the terminal device may determine that the subframe that is on the non-anchor carrier and that corresponds to the valid subframe on the anchor carrier is the at least one valid subframe on the non-anchor carrier, and determine that the subframe that is on the non-anchor carrier and that is used for transmitting the SIB1 is an invalid subframe.

Further, the terminal device may determine that subframes that are on the non-anchor carrier and that correspond to the subframes for transmitting the PSS, the SSS, and the PBCH on the anchor carrier are valid subframes on the non-anchor carrier.

It should be noted that, in an NB-IoT scenario, the PSS is a narrowband primary synchronization signal (narrow band primary synchronization signal, NPSS), the SSS is a narrowband secondary synchronization signal (narrow band secondary synchronization signal, NSSS), the PBCH is a narrowband physical broadcast channel (narrow band physical broadcast channel, NPBCH), and the SIB1 is a SIB1-NB.

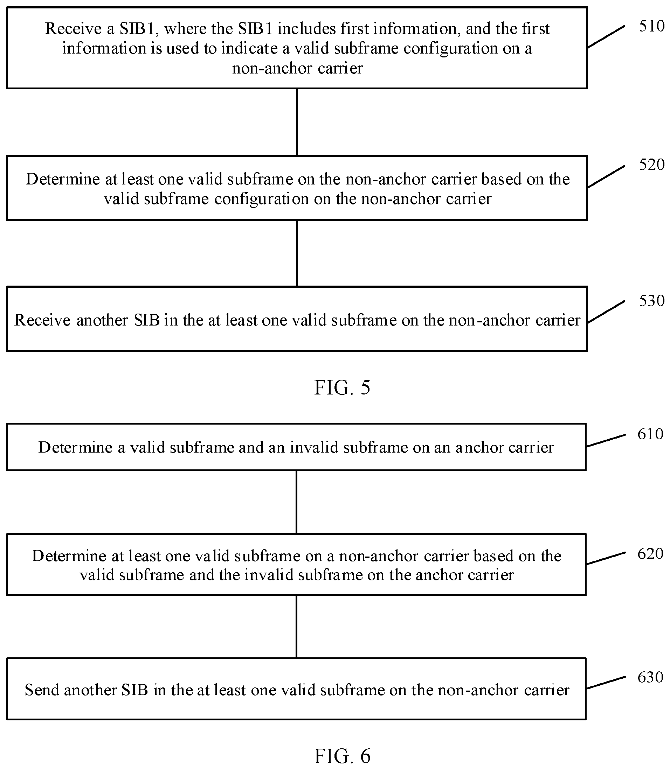

FIG. 5 is a schematic flowchart of another communications method according to an embodiment of this application in accordance with the claims. The method in FIG. 5 includes steps 510 to 530. The following describes steps 510 to 530 in detail.

Step 510: Receive a SIB1, where the SIB1 includes first information, and the first information is used to indicate a valid subframe configuration on a non-anchor carrier.

The first information may be a string of fields or characters. The first information may be represented by using a bit. For example, the first information occupies M bits, and M is a positive integer. The M bits may be 10 bits, or may be 40 bits or 80 bits. This is not specifically limited in this embodiment of this application. Specifically, in an in-band deployment mode, 10 bits or 40 bits may be used to represent the preset information. In a standalone deployment mode or a guard-band deployment mode, 40 bits may be used to represent the first information.

Each bit in the M bits is used to indicate whether a subframe corresponding to the bit is a valid subframe or an invalid subframe on the non-anchor carrier. The correspondence may mean that each bit in the M bits is in a one-to-one correspondence with each subframe on the non-anchor carrier. The 10 bits correspond to 10 subframes in one radio frame, the 40 bits correspond to 40 subframes in four radio frames, and the 80 bits correspond to 80 subframes in eight radio frames.

In an example in which the M bits are 10 bits, the correspondence means that the 1^{st} bit corresponds to a subframe 0 in a radio frame 0, the 2^{nd} bit corresponds to a subframe 1 in the radio frame 0, and by analogy, the 10^{th} bit corresponds to a subframe 9 in the radio frame 0. When a value of a bit is 0, it indicates that a subframe corresponding to the bit is an invalid subframe. When a value of a bit is 1, it indicates that a subframe corresponding to the bit is a valid subframe.

Step 520: Determine at least one valid subframe on the non-anchor carrier based on the valid subframe configuration on the non-anchor carrier.

In this embodiment of this application, the at least one valid subframe on the non-anchor carrier may also be referred to as a valid subframe set on the non-anchor carrier. The non-anchor carrier is a carrier used to transmit another SIB. A terminal device may determine a valid subframe and an invalid subframe on the non-anchor carrier based on the valid subframe configuration on the non-anchor carrier.

Step 530: Receive another SIB in the at least one valid subframe on the non-anchor carrier.

In this embodiment of this application, that the terminal device receives the another SIB in the at least one valid subframe on the non-anchor carrier means that the terminal device receives the another SIB in at least one valid downlink subframe, or at least one valid downlink subframe and at least one valid special subframe on the non-anchor carrier.

In this embodiment of this application, because the terminal device receives the another SIB in the valid subframe on the non-anchor carrier, it can be ensured that the terminal device correctly receives the another SIB, thereby ensuring that the terminal device can normally work in a TDD scenario.

Optionally, in an embodiment, the first information may also be used to indicate a valid subframe configuration on an anchor carrier. In other words, in this embodiment of this application, the first information may be reused, and the first information is used to indicate both the valid subframe configuration on the anchor carrier and the valid subframe configuration on the non-anchor carrier. In this way, signaling overheads can be reduced.

In an embodiment in accordance with the claims, the SIB1 further includes second information, and the second information is used to indicate the valid subframe configuration on the anchor carrier. In other words, the first information is information newly added to the SIB1, and the first information is specially used to indicate the valid subframe configuration on the non-anchor carrier. In this indication manner, a valid subframe and an invalid subframe on the non-anchor carrier can be accurately indicated, so as to avoid a resource waste.

In addition, an embodiment of this application further provides a communications method. A terminal device receives a SIB1, where the SIB1 includes third information and fourth information, the third information is used to indicate a valid subframe configuration on an anchor carrier, and the fourth information is used to indicate a valid subframe configuration of a subframe that is on a non-anchor carrier and that corresponds to an invalid subframe on the anchor carrier. The terminal device determines at least one valid subframe on the non-anchor carrier based on the valid subframe configuration on the anchor carrier and the valid subframe configuration of the subframe that is on the non-anchor carrier and that corresponds to the invalid subframe on the anchor carrier, and receives another SIB in the at least one valid subframe on the non-anchor carrier.

Specifically, after receiving the valid subframe configuration on the anchor carrier, the terminal device may determine a valid subframe and an invalid subframe on the anchor carrier according to the foregoing method. The terminal device may determine that a subframe that is on the non-anchor carrier and that corresponds to a valid subframe on the anchor carrier is a valid subframe, and determine, based on the fourth information, whether the remaining subframes on the non-anchor carrier are valid subframes or invalid subframes.

The fourth information may be a string of fields or characters. The fourth information may be represented by using a bit. When a value of a bit is 1, it indicates that a subframe corresponding to the bit is a valid subframe. When a value of a bit is 0, it indicates that a subframe corresponding to the bit is an invalid subframe.

According to the technical solution provided in this embodiment of this application, only less information is required to indicate whether the subframe that is on the non-anchor carrier and that corresponds to the invalid subframe on the anchor carrier is a valid subframe or an invalid subframe. Therefore, a valid subframe and an invalid subframe on the non-anchor carrier can be accurately determined with relatively low signaling overheads.

FIG. 6 is a schematic flowchart of another communications method according to an embodiment of this application. The method in FIG. 6 may be performed by a network device, or may be performed by a chip in the network device. The method in FIG. 6 includes steps 610 to 630. The following describes steps 610 to 630 in detail.

Step 610: Determine a valid subframe and an invalid subframe on an anchor carrier.

Step 620: Determine at least one valid subframe on a non-anchor carrier based on the valid subframe and the invalid subframe on the anchor carrier.

In this embodiment of this application, the at least one valid subframe on the non-anchor carrier may also be referred to as a valid subframe set on the non-anchor carrier. The non-anchor carrier is a carrier used to transmit another SIB. The network device may determine a valid subframe and an invalid subframe on the non-anchor carrier based on a valid subframe configuration on the anchor carrier.

Step 630: Send another SIB in the at least one valid subframe on the non-anchor carrier. In other words, the terminal device sends the another SIB in the valid subframe set on the non-anchor carrier.

In this embodiment of this application, that the network device sends the another SIB in at the least one valid subframe on the non-anchor carrier means that the network device sends the another SIB in at least one valid downlink subframe, or at least one valid downlink subframe and at least one valid special subframe on the non-anchor carrier.

The network device determines the at least one valid subframe on the non-anchor carrier in a specific manner, and sends the another SIB in the at least one valid subframe on the non-anchor carrier, so as to ensure that the terminal device correctly receives the another SIB, thereby ensuring normal communication with a terminal device. In addition, the network device can determine the at least one valid subframe on the non-anchor carrier without introducing new signaling, thereby reducing signaling overheads.

Optionally, the network device may determine the valid subframe and the invalid subframe on the anchor carrier based on the valid subframe configuration on the anchor carrier and a subframe for transmitting a first signal on the anchor carrier. The first signal includes at least one of the following signals: a PSS, an SSS, a PBCH, and a SIB1.

Specifically, when the network device sends a SIB1, the SIB1 carries preset information, and the preset information is used to indicate the valid subframe configuration on the anchor carrier.

The preset information may be a string of fields or characters. The preset information may be represented by using a bit (bit). For example, the preset information may be represented by using 10 bits, or may be represented by using 40 bits or 80 bits. This is not specifically limited in this embodiment of this application. Specifically, in an in-band deployment mode, 10 bits or 40 bits may be used to represent the preset information. In a standalone deployment mode or a guard-band deployment mode, 40 bits may be used to represent the preset information.

The 10 bits correspond to 10 subframes in one radio frame, the 40 bits correspond to 40 subframes in four radio frames, and the 80 bits correspond to 80 subframes in eight radio frames. In an example of 10 bits, the correspondence may mean that the 1^{st} bit corresponds to a subframe 0 in a radio frame 0, the 2^{nd} bit corresponds to a subframe 1 in the radio frame 0, and by analogy, the 10^{th} bit corresponds to a subframe 9 in the radio frame 0. When a value of a bit is 0, it indicates that a subframe corresponding to the bit is an invalid subframe. When a value of a bit is 1, it indicates that a subframe corresponding to the bit is a valid subframe.

After determining the valid subframe and the invalid subframe on the anchor carrier based on the preset information, the network device further determines the subframe for transmitting the first signal on the anchor carrier, and determines that the subframe for transmitting the first signal on the anchor carrier is an invalid subframe. For a specific manner of determining the valid subframe and the invalid subframe on the anchor carrier, refer to the foregoing description. For brevity, details are not described herein again.

A specific implementation of step 620 is not specifically limited in this embodiment of this application. In an example, the network device may determine at least one valid downlink subframe on the non-anchor carrier based on a valid downlink subframe and an invalid downlink subframe on the anchor carrier. The network device sends another SIB in the at least one valid downlink subframe on the non-anchor carrier. In another example, the network device may determine at least one valid downlink subframe and at least one valid special subframe on the non-anchor carrier based on a valid downlink subframe and a valid special subframe on the anchor carrier. The network device sends another SIB in the at least one valid downlink subframe and the at least one valid special subframe on the non-anchor carrier. In another example, the network device may determine the valid subframe on the non-anchor carrier based on the valid subframe and the invalid subframe on the anchor carrier. The network device determines at least one valid downlink subframe, or at least one valid downlink subframe and at least one special subframe on the non-anchor carrier based on an uplink-downlink subframe configuration on the non-anchor carrier and at least one valid subframe on the non-anchor carrier, and the network device sends another SIB in the at least one valid downlink subframe, or the at least one valid downlink subframe and the at least one special subframe on the non-anchor carrier.

The following describes a specific implementation manner of step 620 in detail by using an example.

In an example, the network device may directly determine that a subframe that is on the non-anchor carrier and that corresponds to the valid subframe on the anchor carrier is the at least one valid subframe on the non-anchor carrier. The correspondence may mean that super frames on the anchor carrier are in a one-to-one correspondence with super frames on the non-anchor carrier, radio frames on the anchor carrier are in a one-to-one correspondence with radio frames on the non-anchor carrier, and subframes on the anchor carrier are in a one-to-one correspondence with subframes on the non-anchor carrier. For example, a radio frame 0 on the anchor carrier corresponds to a radio frame 0 on the non-anchor carrier, and a radio frame 1 on the anchor carrier corresponds to a radio frame 1 on the non-anchor carrier; a subframe 1 on the anchor carrier corresponds to a subframe 1 on the non-anchor carrier, and a subframe 2 on the anchor carrier corresponds to a subframe 2 on the non-anchor carrier.

In another example, when a SIB 1 is transmitted on the anchor carrier, the network device may determine that the subframe that is on the non-anchor carrier and that corresponds to the valid subframe on the anchor carrier and a subframe corresponding to a subframe for transmitting a target signal on the anchor carrier are the at least one subframe on the non-anchor carrier. The target signal includes at least one of the following signals: a PSS, an SSS, a PBCH, and a SIB1.

The subframe that is on the non-anchor carrier and that corresponds to the subframe for transmitting the target signal on the anchor carrier may mean that a subframe 5 for transmitting the PSS on the anchor carrier corresponds to a subframe 5 on the non-anchor carrier, a subframe 0 for transmitting the SSS on the anchor carrier corresponds to a subframe 0 on the non-anchor carrier, a subframe 9 for transmitting the PBCH on the anchor carrier corresponds to a subframe 9 on the non-anchor carrier, a subframe 0 for transmitting the SIB 1 on the anchor carrier corresponds to a subframe 0 on the non-anchor carrier, or a subframe 4 for transmitting the SIB 1 on the anchor carrier corresponds to a subframe 4 on the non-anchor carrier.

Optionally, in an embodiment, if the network device determines that the SIB1 is transmitted on a non-anchor carrier, and the non-anchor carrier on which the SIB 1 is transmitted and a non-anchor carrier on which another SIB is transmitted are a same non-anchor carrier, the network device may determine that the subframe that is on the non-anchor carrier and that corresponds to the valid subframe on the anchor carrier is the at least one valid subframe on the non-anchor carrier, and determine that a subframe that is on the non-anchor carrier and that is used for transmitting the SIB1 is an invalid subframe.

Further, the network device may determine that subframes that are on the non-anchor carrier and that correspond to the subframes for transmitting the PSS, the SSS, and the PBCH on the anchor carrier are valid subframes

It should be noted that, in an NB-IoT scenario, the PSS is an NPSS, the SSS is an NSSS, the PBCH is an NPBCH, and the SIB1 is a SIB1-NB.

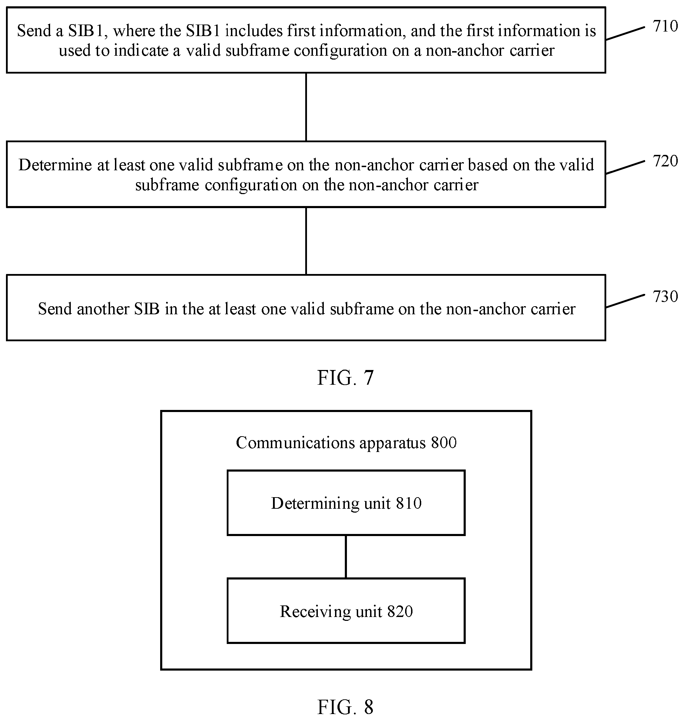

FIG. 7 is a schematic flowchart of another communications method according to an embodiment of this application in accordance with the claims. The method in FIG. 7 may be performed by a network device, or may be performed by a chip in the network device. The method in FIG. 7 includes steps 710 to 730. The following describes steps 710 to 730 in detail.

Step 710: Send a SIB1, where the SIB1 includes first information, and the first information is used to indicate a valid subframe configuration on a non-anchor carrier.

The first information may be a string of fields or characters. The first information may be represented by using a bit. For example, the first information occupies M bits, and M is a positive integer. The M bits may be 10 bits, or may be 40 bits or 80 bits. This is not specifically limited in this embodiment of this application.

Each bit in the M bits is used to indicate whether a subframe corresponding to the bit is a valid subframe or an invalid subframe on the non-anchor carrier. The correspondence may mean that each bit in the M bits is in a one-to-one correspondence with each subframe on the non-anchor carrier. The 10 bits correspond to 10 subframes in one radio frame, the 40 bits correspond to 40 subframes in four radio frames, and the 80 bits correspond to 80 subframes in eight radio frames.

In an example in which the M bits are 10 bits, the correspondence means that the 1^{st} bit corresponds to a subframe 0 in a radio frame 0, the 2^{nd} bit corresponds to a subframe 1 in the radio frame 0, and by analogy, the 10^{th} bit corresponds to a subframe 9 in the radio frame 0. When a value of a bit is 0, it indicates that a subframe corresponding to the bit is an invalid subframe. When a value of a bit is 1, it indicates that a subframe corresponding to the bit is a valid subframe.

Step 720: Determine at least one valid subframe on the non-anchor carrier based on the valid subframe configuration on the non-anchor carrier.

In this embodiment of this application, the at least one valid subframe on the non-anchor carrier may also be referred to as a valid subframe set on the non-anchor carrier. The non-anchor carrier is a carrier used to transmit another SIB. The network device may determine a valid subframe and an invalid subframe on the non-anchor carrier based on the valid subframe configuration on the non-anchor carrier.

Step 730: Send another SIB in the at least one valid subframe on the non-anchor carrier.

In this embodiment of this application, that the network device sends the another SIB in at the least one valid subframe on the non-anchor carrier means that the network device sends the another SIB in at least one valid downlink subframe, or at least one valid downlink subframe and at least one valid special subframe on the non-anchor carrier.

The network device determines the at least one valid subframe on the non-anchor carrier in a specific manner, and sends the another SIB in the at least one valid subframe on the non-anchor carrier, so as to ensure that the terminal device correctly receives the another SIB, thereby ensuring normal communication with a terminal device.

Optionally, in an embodiment, the first information may also be used to indicate a valid subframe configuration on an anchor carrier. In other words, in this embodiment of this application, the first information may be reused, and the first information is used to indicate both the valid subframe configuration on the anchor carrier and the valid subframe configuration on the non-anchor carrier. In this way, signaling overheads can be reduced.

In an embodiment in accordance with the claims, the SIB1 further includes second information, and the second information is used to indicate the valid subframe configuration on the anchor carrier. In other words, the first information is information newly added to the SIB1, and the first information is specially used to indicate the valid subframe configuration on the non-anchor carrier. In this indication manner, a valid subframe and an invalid subframe on the non-anchor carrier can be accurately indicated, so as to avoid a resource waste.

In addition, an embodiment of this application further provides a communications method. A network device sends a SIB1, where the SIB1 includes third information and fourth information, the third information is used to indicate a valid subframe configuration on an anchor carrier, and the fourth information is used to indicate a valid subframe configuration of a subframe that is on a non-anchor carrier and that corresponds to an invalid subframe on the anchor carrier. The network device determines at least one valid subframe on the non-anchor carrier based on the valid subframe configuration on the anchor carrier and the valid subframe configuration of the subframe that is on the non-anchor carrier and that corresponds to the invalid subframe on the anchor carrier, and sends another SIB in the at least one valid subframe on the non-anchor carrier.

The fourth information may be a string of fields or characters. The fourth information may be represented by using a bit. When a value of a bit is 1, it indicates that a subframe corresponding to the bit is a valid subframe. When a value of a bit is 0, it indicates that a subframe corresponding to the bit is an invalid subframe.

According to the technical solution provided in this embodiment of this application, only less information is required to indicate whether the subframe that is on the non-anchor carrier and that corresponds to the invalid subframe on the anchor carrier is a valid subframe or an invalid subframe. Therefore, a valid subframe and an invalid subframe on the non-anchor carrier can be accurately determined with relatively low signaling overheads.

FIG. 8 is a schematic block diagram of a communications apparatus according to an embodiment of this application. The communications apparatus may be a terminal device, or may be a chip or another component in the terminal device. The communications apparatus includes a determining unit 810 and a receiving unit 820.

The determining unit 810 is configured to determine a valid subframe and an invalid subframe on an anchor carrier.

The determining unit 810 is further configured to determine at least one valid subframe on a non-anchor carrier based on the valid subframe and the invalid subframe on the anchor carrier.

In this embodiment of this application, the at least one valid subframe on the non-anchor carrier may also be referred to as a valid subframe set on the non-anchor carrier. The non-anchor carrier is a carrier used to transmit another SIB. The terminal device may determine a valid subframe and an invalid subframe on the non-anchor carrier based on a valid subframe configuration on the anchor carrier.

The receiving unit 820 is configured to receive another system information block SIB in the at least one valid subframe on the non-anchor carrier.

In this embodiment of this application, that the terminal device receives the another SIB in the at least one valid subframe on the non-anchor carrier means that the terminal device receives the another SIB in at least one valid downlink subframe, or at least one valid downlink subframe and at least one valid special subframe on the non-anchor carrier.

Optionally, the terminal device may determine the valid subframe and the invalid subframe on the anchor carrier based on the valid subframe configuration on the anchor carrier and a subframe for transmitting a first signal on the anchor carrier. The first signal includes at least one of the following signals: a PSS, an SSS, a PBCH, and a SIB1.

A manner in which the terminal device determines the at least one valid subframe on the non-anchor carrier is not specifically limited in this embodiment of this application. In an example, the terminal device may directly determine that a subframe that is on the non-anchor carrier and that corresponds to the valid subframe on the anchor carrier is the at least one valid subframe on the non-anchor carrier. In another example, when a SIB 1 is transmitted on the anchor carrier, the terminal device may determine that the subframe that is on the non-anchor carrier and that corresponds to the valid subframe on the anchor carrier and a subframe corresponding to a subframe for transmitting a target signal on the anchor carrier are the at least one valid subframe on the non-anchor carrier. The target signal includes at least one of the following signals: a PSS, an SSS, a PBCH, and a SIB1.

Optionally, in an embodiment, if the terminal device determines that the SIB1 is transmitted on a non-anchor carrier, and the non-anchor carrier on which the SIB 1 is transmitted and a non-anchor carrier on which another SIB is transmitted are a same non-anchor carrier, the terminal device may determine that the subframe that is on the non-anchor carrier and that corresponds to the valid subframe on the anchor carrier is the at least one valid subframe on the non-anchor carrier, and determine that a subframe that is on the non-anchor carrier and that is used for transmitting the SIB1 is an invalid subframe.

Further, the terminal device may determine that subframes that are on the non-anchor carrier and that correspond to the subframes for transmitting the PSS, the SSS, and the PBCH on the anchor carrier are valid subframes on the non-anchor carrier.

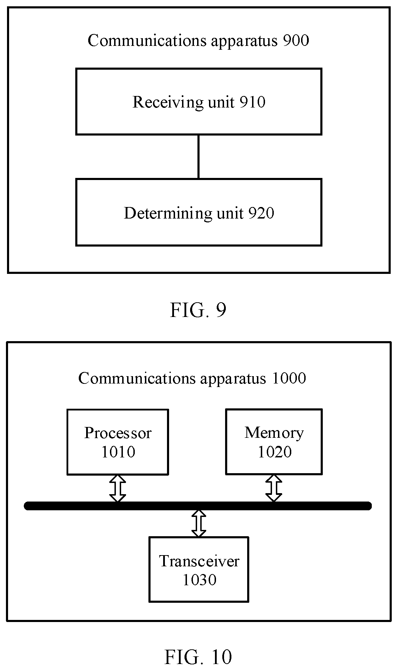

FIG. 9 is a schematic block diagram of another communications apparatus according to an embodiment of this application. The communications apparatus may be a terminal device, or may be a chip or another component in the terminal device. The communications apparatus includes a receiving unit 910 and a determining unit 920.

The receiving unit 910 is configured to receive a system information block SIB1, where the SIB1 includes first information, and the first information is used to indicate a valid subframe configuration on a non-anchor carrier.

The first information may be a string of fields or characters. The first information may be represented by using a bit. For example, the first information occupies M bits, and M is a positive integer. The M bits may be 10 bits, or may be 40 bits or 80 bits. This is not specifically limited in this embodiment of this application. Specifically, in an in-band deployment mode, 10 bits or 40 bits may be used to represent the preset information. In a standalone deployment mode or a guard-band deployment mode, 40 bits may be used to represent the first information.

The determining unit 920 is configured to determine at least one valid subframe on the non-anchor carrier based on the valid subframe configuration on the non-anchor carrier.

In this embodiment of this application, the at least one valid subframe on the non-anchor carrier may also be referred to as a valid subframe set on the non-anchor carrier. The non-anchor carrier is a carrier used to transmit another SIB. The terminal device may determine a valid subframe and an invalid subframe on the non-anchor carrier based on the valid subframe configuration on the non-anchor carrier.

The receiving unit 910 is further configured to receive another system information block SIB in the at least one valid subframe on the non-anchor carrier.

In this embodiment of this application, that the terminal device receives the another SIB in the at least one valid subframe on the non-anchor carrier means that the terminal device receives the another SIB in at least one valid downlink subframe, or at least one valid downlink subframe and at least one valid special subframe on the non-anchor carrier.

In this embodiment of this application, because the terminal device receives the another SIB in the at least one valid subframe on the non-anchor carrier, it can be ensured that the terminal device correctly receives the another SIB, thereby ensuring that the terminal device can normally work in a TDD scenario.

Optionally, in an embodiment, the first information may also be used to indicate a valid subframe configuration on an anchor carrier. In other words, in this embodiment of this application, the first information may be reused, and the first information is used to indicate both the valid subframe configuration on the anchor carrier and the valid subframe configuration on the non-anchor carrier. In this way, signaling overheads can be reduced.

Optionally, in an embodiment, the SIB1 further includes second information, and the second information is used to indicate the valid subframe configuration on the anchor carrier. In other words, the first information is information newly added to the SIB1, and the first information is specially used to indicate the valid subframe configuration on the non-anchor carrier. In this indication manner, a valid subframe and an invalid subframe on the non-anchor carrier can be accurately indicated, so as to avoid a resource waste.

In addition, an embodiment of this application further provides a communications apparatus. A terminal device receives a SIB1, where the SIB1 includes third information and fourth information, the third information is used to indicate a valid subframe configuration on an anchor carrier, and the fourth information is used to indicate a valid subframe configuration of a subframe that is on a non-anchor carrier and that corresponds to an invalid subframe on the anchor carrier. The terminal device determines at least one valid subframe on the non-anchor carrier based on the valid subframe configuration on the anchor carrier and the valid subframe configuration of the subframe that is on the non-anchor carrier and that corresponds to the invalid subframe on the anchor carrier, and receives another SIB in the at least one valid subframe on the non-anchor carrier.

The fourth information may be a string of fields or characters. The fourth information may be represented by using a bit. When a value of a bit is 1, it indicates that a subframe corresponding to the bit is a valid subframe. When a value of a bit is 0, it indicates that a subframe corresponding to the bit is an invalid subframe.

According to the technical solution provided in this embodiment of this application, only less information is required to indicate whether the subframe that is on the non-anchor carrier and that corresponds to the invalid subframe on the anchor carrier is a valid subframe or an invalid subframe. Therefore, a valid subframe and an invalid subframe on the non-anchor carrier can be accurately determined with relatively low signaling overheads.

As shown in FIG. 10, an embodiment of this application further provides a communications apparatus 1000. The communications apparatus 1000 includes a processor 1010, a memory 1020, and a transceiver 1030. The memory 1020 is configured to store an instruction, and the processor 1010 and the transceiver 1030 are configured to execute the instruction stored in the memory 1020. The communications apparatus 1000 may be a terminal device or a component in the terminal device, for example, a chip or a chip set.

It should be understood that the communications apparatus 800 shown in FIG. 8 or the communications apparatus 1000 shown in FIG. 10 may be configured to perform operations or procedures in the foregoing method embodiments, and operations and/or functions of the units in the communications apparatus 800 or the communications apparatus 1000 are respectively intended to implement corresponding procedures in the foregoing method embodiments. For brevity, details are not described herein again.

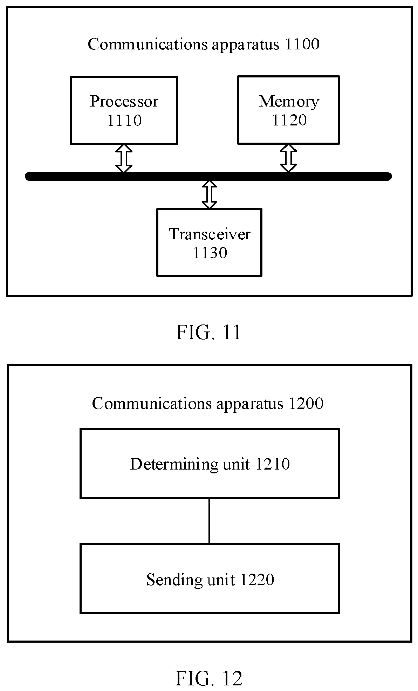

As shown in FIG. 11, an embodiment of this application further provides a communications apparatus 1100. The communications apparatus 1100 includes a processor 1110, a memory 1120, and a transceiver 1130. The memory 1120 is configured to store an instruction, and the processor 1110 and the transceiver 1130 are configured to execute the instruction stored in the memory 1120. The communications apparatus 1100 may be a terminal device or a component in the terminal device, for example, a chip or a chip set.

It should be understood that the communications apparatus 900 shown in FIG. 9 or the communications apparatus 1100 shown in FIG. 11 may be configured to perform operations or procedures in the foregoing method embodiments, and operations and/or functions of the units in the communications apparatus 900 or the communications apparatus 1100 are respectively intended to implement corresponding procedures in the foregoing method embodiments. For brevity, details are not described herein again.

FIG. 12 is a schematic block diagram of another communications apparatus according to an embodiment of this application. The communications apparatus may be a network device, or may be a chip or another component in the network device. The communications apparatus includes a determining unit 1210 and a sending unit 1220.

The determining unit 1210 is configured to determine a valid subframe and an invalid subframe on an anchor carrier.

The determining unit 1210 is further configured to determine at least one valid subframe on a non-anchor carrier based on the valid subframe and the invalid subframe on the anchor carrier.

In this embodiment of this application, the at least one valid subframe on the non-anchor carrier may also be referred to as a valid subframe set on the non-anchor carrier. The non-anchor carrier is a carrier used to transmit another SIB. The network device may determine a valid subframe and an invalid subframe on the non-anchor carrier based on a valid subframe configuration on the anchor carrier.

The sending unit 1220 is configured to send another system information block SIB in the at least one valid subframe on the non-anchor carrier.

In this embodiment of this application, that the network device sends the another SIB in the at least one valid subframe on the non-anchor carrier means that the network device sends the another SIB in at least one valid downlink subframe, or at least one valid downlink subframe and at least one valid special subframe on the non-anchor carrier.

The network device can send the another SIB in the at least one valid subframe on the non-anchor carrier, so as to ensure normal communication with a terminal device. In addition, the network device can determine the at least one valid subframe on the non-anchor carrier without introducing new signaling, thereby reducing signaling overheads.

Optionally, the network device may determine the valid subframe and the invalid subframe on the anchor carrier based on the valid subframe configuration on the anchor carrier and a subframe for transmitting a first signal on the anchor carrier. The first signal includes at least one of the following signals: a PSS, an SSS, a PBCH, and a SIB1.

A manner in which the network device determines the at least one valid subframe on the non-anchor carrier is not specifically limited in this embodiment of this application. In an example, the network device may directly determine that a subframe that is on the non-anchor carrier and that corresponds to the valid subframe on the anchor carrier is the at least one valid subframe on the non-anchor carrier. In another example, when a SIB 1 is transmitted on the anchor carrier, the network device may determine that the subframe that is on the non-anchor carrier and that corresponds to the valid subframe on the anchor carrier and a subframe corresponding to a subframe for transmitting a target signal on the anchor carrier are the at least one valid subframe on the non-anchor carrier. The target signal includes at least one of the following signals: a PSS, an SSS, a PBCH, and a SIB1.

Optionally, in an embodiment, if the network device determines that the SIB1 is transmitted on a non-anchor carrier, and the non-anchor carrier on which the SIB 1 is transmitted and a non-anchor carrier on which another SIB is transmitted are a same non-anchor carrier, the network device may determine that the subframe that is on the non-anchor carrier and that corresponds to the valid subframe on the anchor carrier is the at least one valid subframe on the non-anchor carrier, and determine that a subframe that is on the non-anchor carrier and that is used for transmitting the SIB1 is an invalid subframe.

Further, the network device may determine that subframes that are on the non-anchor carrier and that correspond to the subframes for transmitting the PSS, the SSS, and the PBCH on the anchor carrier are valid subframes on the non-anchor carrier.

It should be noted that, in an NB-IoT scenario, the PSS is an NPSS, the SSS is an NSSS, the PBCH is an NPBCH, and the SIB 1 is a SIB 1-NB.

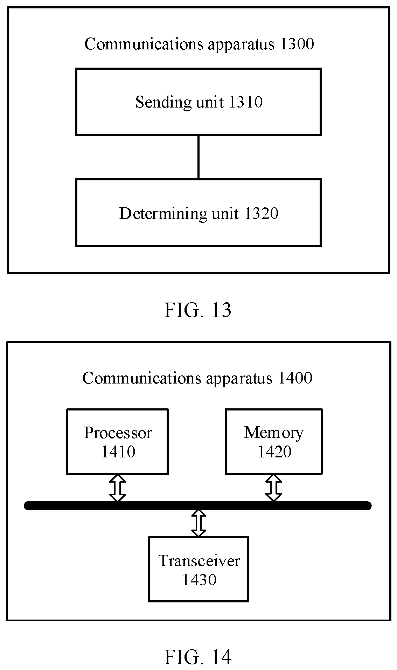

FIG. 13 is a schematic block diagram of another communications apparatus according to an embodiment of this application. The communications apparatus may be a network device, or may be a chip or another component in the network device. The communications apparatus includes a sending unit 1310 and a determining unit 1320.

The sending unit 1310 is configured to send a system information block SIB1, where the SIB1 includes first information, and the first information is used to indicate a valid subframe configuration on a non-anchor carrier.

The first information may be a string of fields or characters. The first information may be represented by using a bit. For example, the first information occupies M bits, and M is a positive integer. The M bits may be 10 bits, or may be 40 bits or 80 bits. This is not specifically limited in this embodiment of this application. Specifically, in an in-band deployment mode, 10 bits or 40 bits may be used to represent the preset information. In a standalone deployment mode or a guard-band deployment mode, 40 bits may be used to represent the first information.

The determining unit 1320 is configured to determine at least one valid subframe on the non-anchor carrier based on the valid subframe configuration on the non-anchor carrier.

In this embodiment of this application, the at least one valid subframe on the non-anchor carrier may also be referred to as a valid subframe set on the non-anchor carrier. The non-anchor carrier is a carrier used to transmit another SIB. The network device may determine a valid subframe and an invalid subframe on the non-anchor carrier based on the valid subframe configuration on the non-anchor carrier.

The sending unit 1310 is further configured to send another system information block SIB in the at least one valid subframe on the non-anchor carrier.

In this embodiment of this application, that the network device sends the another SIB in the at least one valid subframe on the non-anchor carrier means that the network device sends the another SIB in at least one valid downlink subframe, or at least one valid downlink subframe and at least one valid special subframe on the non-anchor carrier.

The network device can send the another SIB in the at least one valid subframe on the non-anchor carrier, so as to ensure normal communication with a terminal device.

Optionally, in an embodiment, the first information may also be used to indicate a valid subframe configuration on an anchor carrier. In other words, in this embodiment of this application, the first information may be reused, and the first information is used to indicate both the valid subframe configuration on the anchor carrier and the valid subframe configuration on the non-anchor carrier. In this way, signaling overheads can be reduced.

Optionally, in an embodiment, the SIB1 further includes second information, and the second information is used to indicate the valid subframe configuration on the anchor carrier. In other words, the first information is information newly added to the SIB1, and the first information is specially used to indicate the valid subframe configuration on the non-anchor carrier. In this indication manner, a valid subframe and an invalid subframe on the non-anchor carrier can be accurately indicated, so as to avoid a resource waste.

In addition, an embodiment of this application further provides a communications apparatus. A network device sends a SIB1, where the SIB1 includes third information and fourth information, the third information is used to indicate a valid subframe configuration on an anchor carrier, and the fourth information is used to indicate a valid subframe configuration of a subframe that is on a non-anchor carrier and that corresponds to an invalid subframe on the anchor carrier. The network device determines at least one valid subframe on the non-anchor carrier based on the valid subframe configuration on the anchor carrier and the valid subframe configuration of the subframe that is on the non-anchor carrier and that corresponds to the invalid subframe on the anchor carrier, and receives another SIB in the at least one valid subframe on the non-anchor carrier.

The fourth information may be a string of fields or characters. The fourth information may be represented by using a bit. When a value of a bit is 1, it indicates that a subframe corresponding to the bit is a valid subframe. When a value of a bit is 0, it indicates that a subframe corresponding to the bit is an invalid subframe.

According to the technical solution provided in this embodiment of this application, only less information is required to indicate whether the subframe that is on the non-anchor carrier and that corresponds to the invalid subframe on the anchor carrier is a valid subframe or an invalid subframe. Therefore, a valid subframe and an invalid subframe on the non-anchor carrier can be accurately determined with relatively low signaling overheads.

As shown in FIG. 14, an embodiment of this application further provides a communications apparatus 1400. The communications apparatus 1400 includes a processor 1410, a memory 1420, and a transceiver 1430. The memory 1420 is configured to store an instruction, and the processor 1410 and the transceiver 1430 are configured to execute the instruction stored in the memory 1420. The communications apparatus 1400 may be a network device or a component in the network device, for example, a chip or a chip set.

It should be understood that the communications apparatus 1200 shown in FIG. 12 or the communications apparatus 1400 shown in FIG. 14 may be configured to perform operations or procedures in the foregoing method embodiments, and operations and/or functions of the units in the communications apparatus 1200 or the communications apparatus 1400 are respectively intended to implement corresponding procedures in the foregoing method embodiments. For brevity, details are not described herein again.

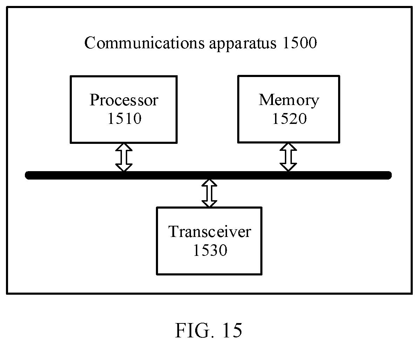

As shown in FIG. 15, an embodiment of this application further provides a communications apparatus 1500. The communications apparatus 1500 includes a processor 1510, a memory 1520, and a transceiver 1530. The memory 1520 is configured to store an instruction, and the processor 1510 and the transceiver 1530 are configured to execute the instruction stored in the memory 1520. The communications apparatus 1500 may be a network device or a component in the network device, for example, a chip or a chip set.

It should be understood that the communications apparatus 1300 shown in FIG. 13 or the communications apparatus 1500 shown in FIG. 15 may be configured to perform operations or procedures in the foregoing method embodiments, and operations and/or functions of the units in the communications apparatus 1300 or the communications apparatus 1500 are respectively intended to implement corresponding procedures in the foregoing method embodiments. For brevity, details are not described herein again.

In any one of FIG. 10, FIG. 11, FIG. 14, and FIG. 15, the transceiver is specifically configured to receive and send a signal, and the processor is configured to control the transceiver to receive and send the signal, and perform another processing or determining function. Therefore, the transceiver is equivalent to an execution body for receiving and sending an air interface signal, and the processor is a controller for receiving and sending the air interface signal, and is configured to schedule or control the transceiver to implement receiving and sending. The processor is driven by an instruction in the memory to control the transceiver to work, to implement receiving and sending of various signals, and jointly implement a procedure of any one of the foregoing method embodiments.

Persons of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the division into units is merely division into logical functions and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A communications method performed by a terminal device or a chip in the terminal device, the method comprising the steps of:
• receiving (step 510) a system information block SIB1, wherein the SIB1 comprises scheduling information of another SIB, first information and second information,
wherein the another SIB is a system information block other than the SIB1; the scheduling information of another SIB comprises at least one of a period of system information SI, a window length of the SI, a window offset of the SI, a repetition mode of the SI, a size of a system information block, and mapping information of the another SIB; the first information is used to indicate a valid subframe configuration on a non-anchor carrier; the second information is used to indicate a valid subframe configuration on an anchor carrier; and the SIB1 indicates that the another SIB is sent on the non-anchor carrier;
• determining (step 520) at least one valid subframe on the non-anchor carrier based on the valid subframe configuration on the non-anchor carrier; and
• receiving (step 530) the another SIB in the at least one valid subframe on the non-anchor carrier.

2. The communications method according to claim 1, wherein the first information occupies M bits, each bit in the M bits is used to indicate whether a subframe corresponding to the bit is a valid subframe or an invalid subframe on the non-anchor carrier, and M is a positive integer.

3. The communications method according to claim 1, wherein the M bits are 10 bits or 40 bits.

4. A communications method performed by a network device or a chip in the network device, the method comprising the steps of:
• sending (step 710) a system information block SIB1, wherein the SIB1 comprises scheduling information of another SIB, first information and second information, wherein the another SIB is a system information block other than the SIB₁; the scheduling information of another SIB comprises at least one of a period of system information SI, a window length of the SI, a window offset of the SI, a repetition mode of the SI, a size of a system information block, and mapping information of the another SIB; the first information is used to indicate a valid subframe configuration on a non-anchor carrier; the second information is used to indicate a valid subframe configuration on an anchor carrier; and the SIB1 indicates that the another SIB is sent on the non-anchor carrier;
• determining (step 720) at least one valid subframe on the non-anchor carrier based on the valid subframe configuration on the non-anchor carrier; and
• sending (step 730) the another SIB in the at least one valid subframe on the non-anchor carrier.

5. The communications method according to claim 4, wherein the first information occupies M bits, each bit in the M bits is used to indicate whether a subframe corresponding to the bit is a valid subframe or an invalid subframe on the non-anchor carrier, and M is a positive integer.

6. The communications method according to claim 4, wherein the M bits are 10 bits or 40 bits.

7. A communication apparatus configured to perform any of the methods according to claims 1 - 3.

8. A network device configured to perform any of the methods according to claims 4 - 6.

9. A computer-readable storage medium comprising computer instructions, wherein, when the computer instructions are run on the terminal device of claim 7, the terminal device is caused to perform any of the methods according to claims 1 - 3.

10. A computer-readable storage medium comprising computer instructions, wherein, when the computer instructions are run on the network device of claim 8, the network device is caused to perform any of the methods according to claims 4 - 6.

11. A communication system comprising the communication apparatus of claim 7 and the network device of claim 8.

## Patentansprüche

1. Kommunikationsverfahren, das durch ein Endgerät oder einen Chip in dem Endgerät durchgeführt wird, wobei das Verfahren die Schritte umfasst:
• Empfangen (Schritt 510) eines Systeminformationsblocks SIB1, wobei der SIB1 Planungsinformationen eines anderen SIB, erste Informationen und zweite Informationen umfasst,
wobei der andere SIB ein anderer Systeminformationsblock als der SIB1 ist; die Planungsinformationen des anderen SIB mindestens eines von einem Zeitraum von Systeminformationen SI, einer Fensterlänge der SI, einem Fensterversatz der SI, einem Wiederholungsmodus der SI, einer Größe eines Systeminformationsblocks und Zuordnungsinformationen des anderen SIB umfassen; die ersten Informationen verwendet werden, um eine gültige Subframe-Konfiguration auf einem Nicht-Ankerträger anzugeben; die zweiten Informationen verwendet werden, um eine gültige Subframe-Konfiguration auf einem Ankerträger anzugeben; und der SIB1 angibt, dass der andere SIB auf dem Nicht-Ankerträger gesendet wird;
• Bestimmen (Schritt 520) mindestens eines gültigen Subframes auf dem Nicht-Ankerträger basierend auf der gültigen Subframe-Konfiguration auf dem Nicht-Ankerträger; und
• Empfangen (Schritt 530) des anderen SIB in dem mindestens einen gültigen Subframe auf dem Nicht-Ankerträger.

2. Kommunikationsverfahren nach Anspruch 1, wobei die ersten Informationen M Bits belegen, jedes Bit in den M Bits verwendet wird, um anzugeben, ob ein dem Bit entsprechender Subframe ein gültiger Subframe oder ein ungültiger Subframe auf dem Nicht-Ankerträger ist, und M eine positive ganze Zahl ist.

3. Kommunikationsverfahren nach Anspruch 1, wobei die M Bits 10 Bits oder 40 Bits sind.

4. Kommunikationsverfahren, das durch eine Netzwerkvorrichtung oder einen Chip in der Netzwerkvorrichtung durchgeführt wird, wobei das Verfahren die Schritte umfasst:
• Senden (Schritt 710) eines Systeminformationsblocks SIB1, wobei der SIB1 Planungsinformationen eines anderen SIB, erste Informationen und zweite Informationen umfasst, wobei der andere SIB ein anderer Systeminformationsblock als der SIB1 ist; die Planungsinformationen des anderen SIB mindestens eines von einem Zeitraum von Systeminformationen SI, einer Fensterlänge der SI, einem Fensterversatz der SI, einem Wiederholungsmodus der SI, einer Größe eines Systeminformationsblocks und Zuordnungsinformationen des anderen SIB umfassen; die ersten Informationen verwendet werden, um eine gültige Subframe-Konfiguration auf einem Nicht-Ankerträger anzugeben; die zweiten Informationen verwendet werden, um eine gültige Subframe-Konfiguration auf einem Ankerträger anzugeben; und der SIB1 angibt, dass der andere SIB auf dem Nicht-Ankerträger gesendet wird;
• Bestimmen (Schritt 720) mindestens eines gültigen Subframes auf dem Nicht-Ankerträger basierend auf der gültigen Subframe-Konfiguration auf dem Nicht-Ankerträger; und
• Senden (Schritt 730) des anderen SIB in dem mindestens einen gültigen Subframe auf dem Nicht-Ankerträger.

5. Kommunikationsverfahren nach Anspruch 4, wobei die ersten Informationen M Bits belegen, jedes Bit in den M Bits verwendet wird, um anzugeben, ob ein dem Bit entsprechender Subframe ein gültiger Subframe oder ein ungültiger Subframe auf dem Nicht-Ankerträger ist, und M eine positive ganze Zahl ist.

6. Kommunikationsverfahren nach Anspruch 4, wobei die M Bits 10 Bits oder 40 Bits sind.

7. Kommunikationseinrichtung, die konfiguriert ist, um ein beliebiges der Verfahren nach den Ansprüchen 1 bis 3 durchzuführen.

8. Netzwerkvorrichtung, die konfiguriert ist, um ein beliebiges der Verfahren nach den Ansprüchen 4 bis 6 durchzuführen.

9. Computerlesbares Speichermedium, das Computeranweisungen umfasst, wobei, wenn die Computeranweisungen auf dem Endgerät nach Anspruch 7 ablaufen, das Endgerät veranlasst wird, ein beliebiges der Verfahren nach den Ansprüchen 1 bis 3 durchzuführen.

10. Computerlesbares Speichermedium, das Computeranweisungen umfasst, wobei, wenn die Computeranweisungen auf der Netzwerkvorrichtung nach Anspruch 8 ablaufen, die Netzwerkvorrichtung veranlasst wird, ein beliebiges der Verfahren nach den Ansprüchen 4 bis 6 durchzuführen.

11. Kommunikationssystem, das die Kommunikationseinrichtung nach Anspruch 7 und die Netzwerkvorrichtung nach Anspruch 8 umfasst.

## Revendications

1. Procédé de communications réalisé par un dispositif terminal ou une puce dans le dispositif terminal, le procédé comprenant les étapes consistant à :
• recevoir (étape 510) un bloc d'informations système SIB1, dans lequel le SIB1 comprend des informations de programmation d'un autre SIB, des premières informations et des secondes informations,
dans lequel l'autre SIB est un bloc d'informations système autre que le SIB1 ; les informations de programmation d'un autre SIB comprennent au moins l'un parmi une période d'informations système SI, une longueur de fenêtre des SI, un décalage de fenêtre des SI, un mode de répétition des SI, une taille d'un bloc d'informations système et des informations de mappage de l'autre SIB ; les premières informations sont utilisées pour indiquer une configuration de sous-trame valide sur une porteuse de non-ancrage ; les secondes informations sont utilisées pour indiquer une configuration de sous-trame valide sur une porteuse d'ancrage ; et le SIB1 indique que l'autre SIB est envoyé sur la porteuse de non-ancrage ;
• déterminer (étape 520) au moins une sous-trame valide sur la porteuse de non-ancrage sur la base de la configuration de sous-trame valide sur la porteuse de non-ancrage ; et
• recevoir (étape 530) l'autre SIB dans l'au moins une sous-trame valide sur la porteuse de non-ancrage.

2. Procédé de communications selon la revendication 1, dans lequel les premières informations occupent M bits, chaque bit dans les M bits est utilisé pour indiquer si une sous-trame correspondant au bit est une sous-trame valide ou une sous-trame non valide sur la porteuse de non-ancrage, et M est un nombre entier positif.

3. Procédé de communications selon la revendication 1, dans lequel les M bits sont 10 bits ou 40 bits.

4. Procédé de communications réalisé par un dispositif de réseau ou une puce dans le dispositif de réseau, le procédé comprenant les étapes consistant à :
• envoyer (étape 710) un bloc d'informations système SIB1, dans lequel le SIB1 comprend des informations de programmation d'un autre SIB, des premières informations et des secondes informations, dans lequel l'autre SIB est un bloc d'informations système autre que le SIB1 ; les informations de programmation d'un autre SIB comprennent au moins l'un parmi une période d'informations système SI, une longueur de fenêtre des SI, un décalage de fenêtre des SI, un mode de répétition des SI, une taille d'un bloc d'informations système et des informations de mappage de l'autre SIB ; les premières informations sont utilisées pour indiquer une configuration de sous-trame valide sur une porteuse de non-ancrage ; les secondes informations sont utilisées pour indiquer une configuration de sous-trame valide sur une porteuse d'ancrage ; et le SIB1 indique que l'autre SIB est envoyé sur la porteuse de non-ancrage ;
• déterminer (étape 720) au moins une sous-trame valide sur la porteuse de non-ancrage sur la base de la configuration de sous-trame valide sur la porteuse de non-ancrage ; et
• envoyer (étape 730) l'autre SIB dans l'au moins une sous-trame valide sur la porteuse de non-ancrage.

5. Procédé de communications selon la revendication 4, dans lequel les premières informations occupent M bits, chaque bit dans les M bits est utilisé pour indiquer si une sous-trame correspondant au bit est une sous-trame valide ou une sous-trame non valide sur la porteuse de non-ancrage, et M est un nombre entier positif.

6. Procédé de communications selon la revendication 4, dans lequel les M bits sont 10 bits ou 40 bits.

7. Appareil de communication configuré pour réaliser l'un quelconque des procédés selon les revendications 1 à 3.

8. Dispositif de réseau configuré pour réaliser l'un quelconque des procédés selon les revendications 4 à 6.

9. Support de stockage lisible par ordinateur comprenant des instructions informatiques, dans lequel, lorsque les instructions informatiques sont exécutées sur le dispositif terminal selon la revendication 7, le dispositif terminal est amené à réaliser l'un quelconque des procédés selon les revendications 1 à 3.

10. Support de stockage lisible par ordinateur, comprenant des instructions informatiques, dans lequel, lorsque les instructions informatiques sont exécutées sur le dispositif de réseau selon la revendication 8, le dispositif de réseau est amené à réaliser l'un quelconque des procédés selon les revendications 4 à 6.

11. Système de communication comprenant l'appareil de communication selon la revendication 7 et le dispositif de réseau selon la revendication 8.
